# EUROPEAN PATENT SPECIFICATION

(11) **EP 3 548 684 B1**
(45) Date of publication and mention of the grant of the patent: **02.03.2022**
(21) Application number: 18760625.6
(22) Date of filing: 24.01.2018
(51) Int. Cl.: E05B 71/00, E05B 17/00, B62H 5/00

(54) **LOCK WITH WATERPROOF PIPE**
SCHLOSS MIT WASSERDICHTE MUFFE
SERRURE AVEC MANCHE ÉTANCHE À L'EAU

(30) Priority: 28.02.2017 CN 201710110519; 28.02.2017 CN 201720187721 U; 09.05.2017 CN 201710321829; 09.05.2017 CN 201720512312 U; 09.05.2017 CN 201710322287; 09.05.2017 CN 201720512285 U
(43) Date of publication of application: 09.10.2019
(73) Proprietor: Beijing Qisheng Science and Technology Co., Ltd., Beijing 100193 (CN)
(72) Inventor: LIU, Chuan, Beijing 100080 (CN); DUAN, Wei, Beijing 100080 (CN); ZHANG, Wei, Beijing 100080 (CN); XUE, Hanguang, Beijing 100080 (CN); WAN, Xin, Beijing 100080 (CN)
(74) Representative: Wang, Bo
(86) International application number: PCT/CN2018/074056
(87) International publication number: WO 2018/157681

(56) References cited:
- EP-A1- 3 263 430
- CN-A- 1 924 272
- CN-A- 105 480 327
- CN-A- 106 837 015
- CN-A- 106 968 513
- CN-A- 107 013 091
- CN-U- 205 601 973
- CN-U- 205 601 973
- CN-U- 206 554 651
- CN-Y- 2 758 390
- DE-B3-102010 014 145
- DE-U1- 29 609 609
- JP-U- 3 003 888
- US-A- 4 226 100

## Description

### TECHNICAL FIELD

The present invention generally relates to security systems, and more particularly, relates to locks and structures for resisting water and/or foreign objects.

### BACKGROUND

DE 296 09 609 U1 relates to a lock that blocks the disc brake on a motorcycle and that is provided with an alarm device. A pin engaging the lock tongue is provided with a sealing to protect the electronics against water intrusion. DE 10 2010 014 145 B3 relates to a padlock having a padlock housing and a padlock bracket, the pins locking the shackle being provided with sealing rings.

A lock is an important tool to secure a device (e.g., a door, a bicycle, a drawer). The lock is generally exposed to natural circumstances. On the one hand, the lock is subjected to water erosion in outdoor use (e.g., a lock of a bicycle), which may damage the components (e.g., a communication module, a lock cylinder) that need to be isolated from water. On the other hand, the lock usually includes one or more openings to facilitate the locking and/or unlocking operations. Foreign matters (e.g., stones, tree branches) can fall in the openings, and the lock can get stuck, and the normal locking and/or unlocking operations can be affected. Therefore, it may be desirable to develop a lock with structures to protect the lock from being affected by an aqueous solution or other foreign matters. Besides, the lock can be shocked or hit by an external force in normal use or abnormal use. In this case, the lock can become loose, and the lock can be unexpectedly unlocked. Therefore, it may be desirable to develop a lock with structures to limit the position of a lock pin of the lock and prevent the lock from being unexpectedly unlocked.

### SUMMARY

According to an aspect of the present invention, a lock is provided. The lock may include a lock tongue, a lock pin, a lock shell, and a waterproof pipe. The lock tongue may be configured to secure an object. The lock pin may be configured to block the lock tongue to move along an axial direction of the lock tongue. The lock shell may be configured to accommodate at least a portion of the lock tongue or at least a portion of the lock pin. The lock shell may include a through-hole. At least a portion of the lock pin may be moveable inward or outward the lock shell through the through-hole. The waterproof pipe may be arranged around at least a portion of the lock pin. The waterproof pipe may include a first connection end and a second connection end. The first connection end of the waterproof pipe may connect to the lock shell. The second connection end of the waterproof pipe may connect to the lock pin.

In some embodiments, the waterproof pipe may be retractable along a reciprocating movement direction of the lock pin.

In some embodiments, the first connection end of the waterproof pipe may connect to an inner side of the lock shell or a wall of the through-hole.

In some embodiments, the first connection end of the waterproof pipe may additionally include a first protruding element. The inner side of the lock shell or the wall of the through-hole may include a first groove corresponding to the first protruding element. The first protruding element may be insertable in the first groove.

In some embodiments, the second connection end of the waterproof pipe may additionally include a second protruding element. The lock pin may include a second groove. The second protruding element may be insertable in the second groove.

In some embodiments, the waterproof pipe may be made of a material including at least one of a flexible material, an anticorrosion material, an elastic material, or a wear-resistant material.

In some embodiments, a first aperture size of the first connection end of the waterproof pipe may be larger than a second aperture size of the second connection end of the waterproof pipe.

In some embodiments, a cross section of the through-hole may have a circular shape, an ellipse shape, or a strip shape. The lock pin may have a cross section shape corresponding to the through-hole. The waterproof pipe may have a cross section shape corresponding to the through-hole.

In some embodiments, the lock may further include an opening, a handle, and a cover shield. The opening may be arranged on the lock shell, and extended along the axial direction of the lock tongue. The handle may be installed on the lock tongue. The handle may be slidable along the opening. A cover shield may be configured to close the opening of the lock shell.

In some embodiments, the cover shield may be attached to the handle or the lock tongue.

In some embodiments, a projection of the cover shield in a plane of the opening may overlap the opening of the lock shell.

In some embodiments, the cover shield may have an annular sector shape.

In some embodiments, the cover shield may include a protective coating. The protective coating may be made of a material including at least one of a waterproof material, a sunscreen material, or an anticorrosion material.

In some embodiments, the cover shield may include a sheet with a first slit or the cover shield may include two sheets that are matched to form a second slit.

In some embodiments, an extension direction of the first slit, an extension direction of the second slit, or an extension direction of the cover shield may correspond to a movement direction of the handle.

In some embodiments, the cover shield may include an elastic material.

In a preferred embodiment, the lock may further include a position limiting component, and an execution component. The position limiting component may be configured to block the lock pin to move along an axial direction of the lock pin when the lock pin blocks the lock tongue to move along the axial direction of the lock tongue. The execution component may be configured to drive a first movement of the position limiting component and a second movement of the lock pin. The lock pin, the position limiting component, the execution component, and at least a portion of the lock tongue may be accommodated in the lock shell. The first movement of the position limiting component may include a movement of the position limiting component away from the lock pin or the lock shell. The second movement of the lock pin may include a movement of the lock pin away from the lock tongue.

In some embodiments of said preferred embodiment, the lock pin or an inner side of the lock shell may include a limit pinhole configured to accommodate the position limiting component. The limit pinhole may be perpendicular to an axial direction of the lock pin or be perpendicular to the inner side of the lock shell. The position limiting component may include a fixing part and a telescopic part connected to the fixing part. The fixing part may be fixed on the lock shell. The telescopic part may be inserted into the limit pinhole once the lock pin blocks the lock tongue.

In some embodiments of said preferred embodiment, the lock pin may further include a drive pin and a coupling pin. The coupling pin may be connected to the drive pin. The limit pinhole may be arranged on the coupling pin. The drive pin may be configured to drive the coupling pin to be inserted into a lock tongue groove of the lock tongue.

In some embodiments of said preferred embodiment, the execution component may include a drive mechanism and a transmission mechanism. The transmission mechanism may be coupled to the drive mechanism. The transmission mechanism may include a first portion and a second portion. The first portion of the transmission mechanism may be connected to the coupling pin of the lock pin. The second portion of the transmission mechanism may be connected to the telescopic part of the position limiting component. The drive mechanism may be configured to output a force. The first portion of the transmission mechanism may be configured to transmit the force to drive the telescopic part to move away from the limit pinhole. The second portion of the transmission mechanism may be configured to transmit the force to drive the coupling pin to move away from the lock tongue groove.

According to another aspect of the present invention a method for unlocking a lock according to the first aspect of the invention provided. The lock includes a position limiting component, and an execution component. The lock pin may block a lock tongue. The position limiting component may block the lock pin. The method includes sending one or more instructions to the execution component. The method also includes driving, by the execution component, the position limiting component to release a position limitation of a lock pin. The method furthermore includes driving, by the execution component, the lock pin to move away from the lock tongue to unlock the lock.

Additional features will be set forth in part in the description which follows, and in part will become apparent to those skilled in the art upon examination of the following and the accompanying drawings or may be learned by production or operation of the examples. The features of the present invention may be realized and attained by practice or use of various aspects of the methodologies, instrumentalities and combinations set forth in the detailed examples discussed below.

### BRIEF DESCRIPTION OF THE DRAWINGS

The present invention is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an exemplary security system according to some embodiments of the present invention;
FIG. 2 is a schematic diagram illustrating hardware and/or software components of an exemplary computing device according to some embodiments of the present invention;
FIG. 3 is a schematic diagram illustrating hardware and/or software components of an exemplary mobile device according to some embodiments of the present invention;
FIG. 4 is a schematic diagram illustrating hardware components of an exemplary lock according to some embodiments of the present invention;
FIG. 5A illustrates a waterproof structure not in accordance with the invention; FIGs. 5B-5D illustrate sectional views of an exemplary waterproof structure according to an embodiment the present invention;
FIGs. 6A-6F illustrate sectional views of an exemplary lock with a cover shield according to some embodiments of the present invention;
FIG. 7 illustrates a sectional view of a portion of an exemplary lock according to some embodiments of the present invention;
FIGs. 8A-8C illustrate sectional views of an exemplary lock with a position limiting component according to some embodiments of the present invention;
FIGs. 9A-9C illustrate sectional views of an exemplary lock with a position limiting component according to some embodiments of the present invention; and
FIG. 10 is a flowchart illustrating an exemplary process for unlocking a lock according to some embodiments of the present invention.

### DETAILED DESCRIPTION

The following description is presented to enable any person skilled in the art to make and use the present invention and is provided in the context of a particular application and its requirements. Various modifications to the disclosed embodiments will be readily apparent to those skilled in the art, and the general principles defined herein may be applied to other embodiments and applications without departing from the scope of the present invention as defined by the appended claims. Thus, the present invention is not limited to the embodiments shown but is to be accorded the widest scope consistent with the claims.

The terminology used herein is to describe particular exemplary embodiments only and is not intended to be limiting. As used herein, the singular forms "a," "an," and "the" may be intended to include the plural forms as well, unless the context expressly indicates otherwise. It will be further understood that the terms "comprise," "comprises," and/or "comprising," "include," "includes," and/or "including," when used in the present disclosure, specify the presence of stated features, integers, steps, operation, elements, and/or components, but do not preclude the presence or addition of one or more other features, integers, steps, operation, elements, components, and/or groups thereof.

These and other features, and characteristics of the present invention as well as the methods of operation and functions of the related elements of structure and the combination of parts and economies of manufacture, may become more apparent upon consideration of the following description with reference to the accompanying drawings, all of which form a part of the present invention. It is to be expressly understood, however, that the drawings are for illustration and description only, and are not intended to limit the scope of the present invention. It is understood that the drawings are not to scale.

It will be understood that the term "system," "engine," "unit," and/or "module" used herein are one method to distinguish different components, elements, parts, sections, or assemblies of different levels in ascending order. However, the terms may be displaced by other expressions if they achieve the same purpose.

It will be understood that when a unit, engine, or module is referred to as being "on," "connected to," or "coupled to," another unit, engine, or module, it may be directly on, connected or coupled to, or communicate with the other unit, engine, or module, or an intervening unit, engine, or module may be present, unless the context clearly indicates otherwise. As used herein, the term "and/or" includes any and all combinations of one or more of the associated listed items.

The flowcharts used in the present disclosure illustrate operation that systems implement according to some embodiments of the present disclosure. It is to be expressly understood, the operation of the flowcharts may be implemented not in order. Conversely, the operation may be implemented in inverted order, or simultaneously. Moreover, one or more other operation may be added to the flowcharts. One or more operations may be omitted from the flowcharts.

The positioning technology used in the present disclosure may be based on a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning systems may be used interchangeably in the present disclosure.

The present invention relates to locks and structures for resisting water and/or foreign objects. The lock(s) may be used to secure a device (e.g., a bicycle, a door) based on the information related to a security system. The lock(s) may include one or more of a lock tongue, a lock pin, a position limiting component, an execution component, a handle, a lock shell, a waterproof structure, a cover shield, or the like, or any combination thereof. The waterproof structure may prevent water from flowing into one or more components of the lock (e.g., a positioning module, a communication module, a lock cylinder). The cover shield may close an opening of the lock shell. The lock pin may block the lock tongue to move along an axial direction of the lock tongue when the lock is locked or unlocked. The position limiting component may block the lock pin to move along an axial direction of the lock pin when the lock pin blocks the lock tongue to move along the axial direction of the lock tongue.

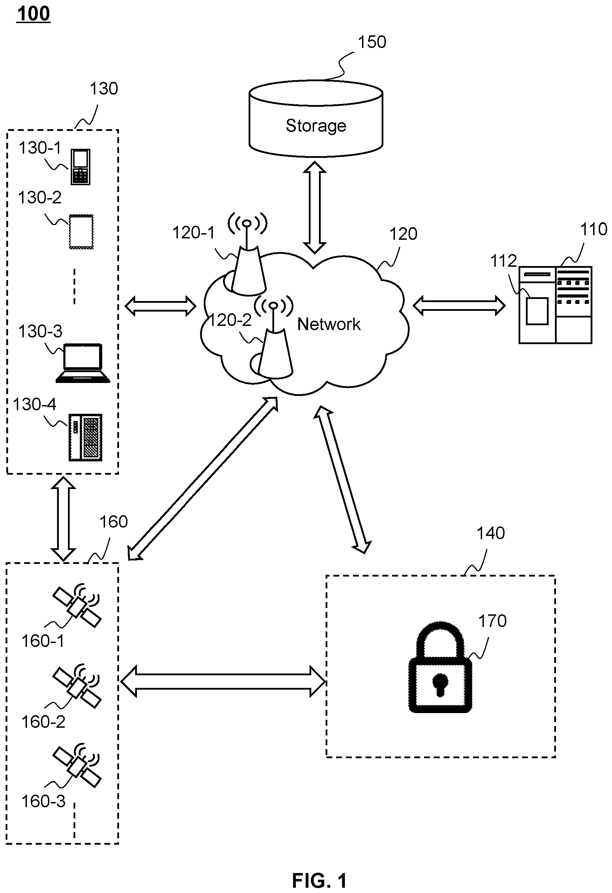

FIG. 1 is a schematic diagram illustrating an exemplary security system 100 that can be used with some embodiments of the present invention. The security system 100 may include a server 110, a network 120, one or more terminal devices 130, a device140, a storage 150, a positioning device 160, and a lock 170. The security system 100 may secure the device140 by the lock 170 by implementing the methods and/or processes disclosed in the present invention. In some embodiments, the device 140 to be secured may be a bicycle. The bicycle may be used in a bicycle sharing system. The bicycle sharing system may provide a bicycle sharing service allowing a user to use a bicycle for a ride. When the user finishes the ride and wants to return the bicycle, the user may leave the bicycle in an area where the parking of the bicycle is permitted and lock the bicycle. The bicycle may then be ready for a next user.

The server 110 may communicate with the terminal device 130, the device140, and/or the lock 170 to provide various functionalities of the security system 100. In some embodiments, the server 110 may receive a request associated with the device 140 from the terminal device 130 via, for example, the network 120. For example, the server 110 may receive a request to lock the device 140 from the terminal device 130 via, for example, the network 120. As another example, the device 140 may be a bicycle in a bicycle sharing system, and the request may be a service request to borrow (or rent) the bicycle. The service request may include order information relating to the ride and/or the bicycle, including, for example, a bicycle type, a departing place, a destination, mileage, a route, or the like, or any combination thereof.

The server 110 may also transmit information to the terminal device 130, the device 140, and/or the lock 170. For example, the server 110 may transmit to a device140 and/or the lock 170 an instruction to lock the device 140, an instruction to unlock the device 140, and/or the information related to the device 140 (e.g., the information indicating whether the device 140 is locked).

In some embodiments, the device 140 may be a bicycle in a bicycle sharing system. The server 110 may determine one or more bicycles in response to a service order received from the terminal device 130 and transmit the information relating to the one or more bicycles to the terminal device 130, including, for example, the locations of the one or more bicycles, the fees for the ride (e.g., the total fees for the ride, the hourly rate for the ride), or the like, or a combination thereof. The server 110 may also provide a service fee management. The server 110 may determine the cost of a ride based on a monthly membership, a quarterly membership, a season (e.g., spring, summer) membership, an annual membership, or fees per ride.

In some embodiments, the server 110 may be a single server or a server group. The server group may be a centralized server group connected to the network 120 via an access point or a distributed server group connected to the network 120 via one or more access points, respectively. In some embodiments, the server 110 may be locally connected to the network 120 or in remote connection with the network 120. For example, the server 110 may access information and/or data stored in the terminal device 130, the device140, and/or the storage 150 via the network 120. As another example, the storage 150 may serve as backend data storage of the server 110. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the server 110 may include a processing engine 112. The processing engine 112 may process information and/or data related to performing one or more functions in the present disclosure. For example, the processing engine 112 may process operation information of the lock 170 to determine the status of the lock (e.g., a locked status, an unlocked status). In some embodiments, the processing engine 112 may include one or more processing units (e.g., single-core processing engine(s) or multi-core processing engine(s)). Merely by way of example, the processing engine 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

The network 120 may facilitate exchange of information and/or data. In some embodiments, one or more components of the security system 100 (e.g., the server 110, the terminal device 130, the device 140, the storage 150, or the lock 170) may transmit information and/or data to another component(s) in the security system 100 via the network 120. For example, the server 110 may access and/or obtain data of a plurality of devices 140 from the storage 150 via the network 120. As another example, the server 110 may transmit a message indicating whether the device 140 is locked to the terminal device 130 via the network 120.

In some embodiments, the network 120 may be any type of wired or wireless network, or combination thereof. Merely by way of example, the network 120 may include a cable network, a wireline network, an optical fiber network, a telecommunications network, an intranet, an Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ... , through which one or more components of the security system 100 may be connected to the network 120 to exchange data and/or information.

In some embodiments, a user may be an owner of the terminal device 130. The terminal device 130 may receive input from the user and transmit the information relating to the input to the server 110 via the network 120. The terminal device 130 may also receive information from the server 110 via the network 120. For example, the terminal device 130 may receive input from the user relating to the device 140 to the server 110, and/or receive information or instructions from the server 110. Merely by way of example, a user may input a request for maintenance service when he or she fails to lock the device 140. The terminal device 130 may be configured to transmit the request for maintenance service to the server 110.

In some embodiments, the device 140 may be a bicycle in a bicycle sharing system. The terminal device 130 may be configured to transmit a service request to the server 110 for searching for bicycles near the location of the terminal device 130. The server 110 may determine one or more bicycles (e.g., the locations of the bicycles, number of the bicycles) near the location of the terminal device 130 according to and in response to the service request. The server 110 may also transmit information relating to the determined one or more bicycles to the terminal device 130 via the network 120. The information of the determined one or more bicycles may be displayed on the terminal device 130 associated with an electronic map. The terminal device 130 may receive input from the user indicating a selected bicycle from the bicycles displayed on the terminal device 130, which may be transmitted to the server 110. The terminal device 130 may also provide a walking navigation for guiding the user to the location of the selected bicycle. As another example, the terminal device 130 may receive input from the user for reserving a bicycle and transmit the information to the server 110. As yet another example, the terminal device 130 may transmit feedback information provided by the user to the server 110. The feedback information may include the status of the bicycle (e.g., whether any part of the bicycle needs to be repaired), improvement suggestions, etc.

In some embodiments, the terminal device 130 may include a mobile device 130-1, a tablet computer 130-2, a laptop computer 130-3, a built-in device in a vehicle 130-4, or the like, or any combination thereof. In some embodiments, the mobile device 130-1 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a smart bracelet, a smart footgear, smart glass, a smart helmet, a smartwatch, smart clothing, a smart backpack, a smart accessory, or the like, or any combination thereof. In some embodiments, the smart mobile device may include a smartphone, a personal digital assistant (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass^{™}, an Oculus Rift^{™}, a Hololens^{™}, a Gear VR^{™}, etc. In some embodiments, a built-in device in the vehicle 130-4 may include a built-in computer, a built-in onboard television, a built-in tablet, etc. In some embodiments, the terminal device 130 may include a signal transmitter and a signal receiver configured to communicate with the positioning device 160 for locating the position of the user and/or the terminal device 130. For example, the terminal device 130 may transmit an instruction to the positioning device 160 to locate the position of the user and/or the terminal device 130.

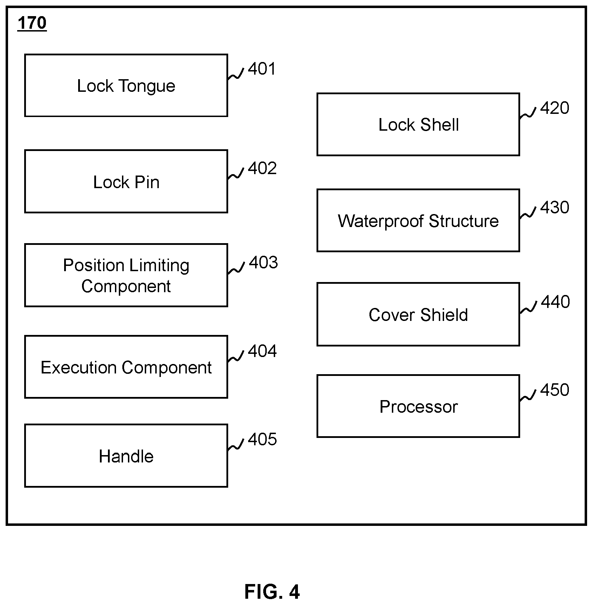

The device 140 may include any device that needs to be secured. Exemplary devices 140 may include a bicycle, a car, a door, a window, a cabinet, a drawer, a package, a safe box, luggage, or the like, or any combination thereof. The lock 170 may be configured to lock the device 140. The lock 170 may include any combination of mechanisms to implement the functions thereof. The lock 170 may be a mechanical lock or an electronic lock. The device 140 and the lock 170 may be separate parts that are mechanically connected to each other. For example, the device 140 and the lock 170 may be separate parts, and the lock 170 may be mounted on the device 140. Additionally or alternatively, the device 140 and the lock may form an integral device. Details regarding the lock 170 may be found elsewhere in the present disclosure (e.g., FIGs. 4-10 and the relevant descriptions thereof).

The device 140 and/or the lock 170 may communicate with the server 110, the network 120, the terminal device 130, and/or the positioning device 160. For example, the device 140 and/or the lock 170 may transmit status information of the device140 and/or the lock 170 to the server 110 via the network 120. The status information may include a location of the device 140, a locked/unlocked status of the device1 40, battery power of the device 140, operation information of lock 170, or the like, or a combination thereof. The server 110 may monitor the device 140 based on the status information. As another example, the device 140 and/or the lock 170 may receive an instruction (e.g., an instruction to lock/unlock the device 140) from the terminal device 130 and/or the server 110. As yet another example, the device 140 may include a signal transmitter and a signal receiver (e.g., a GPS component of the device 140) configured to communicate with the positioning device 160 for locating a position of the device140.

In some embodiments, the device 140 may be a bicycle. The bicycle may be any type of bicycle including, for example, a unicycle, a bicycle, a tricycle, a tandem, a motor bicycle, an electric bicycle, a moped, etc. The color of a bicycle is not limiting. Merely by way of example, the color of the body of the bicycle may be yellow. In some embodiments, a bicycle may include a lock 170. The bicycle and/or the lock 170 may be identified with a unique symbol. The unique symbol may include a barcode, a quick response (QR) code, a serial number including letters and/or digits, or the like, or any combination thereof. For example, the identification (ID) of a lock 170 may be obtained by scanning the QR code of the lock 170 and/or the QR code of the bicycle through a mobile application of the terminal device 130 or a camera of the terminal device 130 (if any). Merely by way of example, the ID of the lock 170 may be obtained by scanning the QR code of the bicycle through a camera of an iPhone.

The storage 150 may store data and/or instructions. The data may include data related to users, terminal devices 130, device 140, etc. Merely by way of example, the device 140 may be a bicycle of a bicycle sharing system. The data related to the users may include user profiles including for example, names of the users, mobile numbers of the users, ID numbers of the users, types of the users (e.g., annual card users, quarterly card users, or monthly card users), usage records of the users (e.g., riding time, cost), credit rating of the users, historical routes, account balance, etc. The data related to the bicycles may include service conditions of the bicycles (an inactive state, a booking state, on a ride, in a maintenance state, in a loss state), positions of the bicycles, types of the bicycles (e.g., a unicycle, a bicycle, a tricycle, a tandem, a motor bicycle, an electric bicycle), etc. In some embodiments, the storage 150 may store data obtained from the terminal device 130 and/or the device 140. For example, the storage 150 may store log information associated with the terminal device 130. In some embodiments, the storage 150 may store data and/or instructions that the server 110 may execute or use to perform exemplary methods described in the present invention.

In some embodiments, the storage 150 may include a mass storage, removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

The positioning device 160 may determine information associated with an object, for example, one or more of the terminal device 130, or the device 140 (e.g., a bicycle). For example, the positioning device 160 may determine a current time and a current location of the terminal device 130 and/or the device 140. In some embodiments, the positioning device 160 may be a global positioning system (GPS), a global navigation satellite system (GLONASS), a compass navigation system (COMPASS), a BeiDou navigation satellite system, a Galileo positioning system, a quasi-zenith satellite system (QZSS), etc. The information may include a location, an elevation, a velocity, or an acceleration of the object, and/or a current time. The location may be in the form of coordinates, such as a latitude coordinate and a longitude coordinate, etc. The positioning device 160 may include one or more satellites, for example, a satellite 160-1, a satellite 160-2, and a satellite 160-3. The satellite 160-1 through 160-3 may determine the information mentioned above independently or jointly. The positioning device 160 may transmit the information mentioned above to the terminal device 130, or the device 140 via the network 120.

In some embodiments, one or more components of the security system 100 may access the data and/or instructions stored in the storage 150 via the network 120. In some embodiments, the storage 150 may be directly connected to the server 110 as a backend storage. In some embodiments, one or more components of the security system 100 (e.g., the server 110, the terminal device 130, or the device 140) may have permissions to access the storage 150. In some embodiments, one or more components of the security system 100 may read and/or modify the information related to the user, and/or the device 140 when one or more conditions are met. For example, the server 110 may read and/or modify one or more users' information after a ride of a bicycle is completed.

In some embodiments, the device 140 may be a bicycle of a bicycle sharing system. The information exchange between one or more components of the security system 100 may be initiated by way of launching the mobile application of the bicycle sharing service on a terminal device 130, requesting a bicycle service, or inputting a query via the terminal device 130 (e.g., searching for a bicycle). The object of the service request may be any product. In some embodiments, the product may include food, medicine, commodity, chemical product, electrical appliance, clothing, car, housing, luxury, or the like, or any combination thereof. In some other embodiments, the product may include a service product, a financial product, a knowledge product, an internet product, or the like, or any combination thereof. The internet product may include an individual host product, a web product, a mobile internet product, a commercial host product, an embedded product, or the like, or any combination thereof. The mobile internet product may be used in a software of a mobile terminal, a program, a system, or the like, or any combination thereof. The mobile terminal may include a tablet computer, a laptop computer, a mobile phone, a personal digital assistant (PDA), a smartwatch, a point of sale (POS) device, an onboard computer, an onboard television, a wearable device, or the like, or any combination thereof. For example, the product may be any software and/or application used on the computer or mobile phone. The software and/or application may relate to socializing, shopping, transporting, entertainment, learning, investment, or the like, or any combination thereof. In some embodiments, the software and/or application related to transporting may include a traveling software and/or application, a vehicle scheduling software and/or application, a mapping software and/or application, etc.

One of ordinary skill in the art would understand that when an element of the security system 100 performs, the element may perform through electrical signals and/or electromagnetic signals. For example, when a terminal device 130 processes a task, such as making a determination, unlocking a device 140, the terminal device 130 may operate logic circuits in its processor to process such task. When the terminal device 130 transmits out a query (e.g., information relating to a location of a device140) to the server 110, a processor of the terminal device 130 may generate electrical signals encoding the query. The processor of the terminal device 130 may then transmit the electrical signals to an output port. If the terminal device 130 communicates with the server 110 via a wired network, the output port may be physically connected to a cable, which further transmits the electrical signal to an input port of the server 110. If the terminal device 130 communicates with the server 110 via a wireless network, the output port of the terminal device 130 may be one or more antennas, which convert the electrical signals to electromagnetic signals. Similarly, a device 140 and/or a lock 170 may process a task through operation of logic circuits in its processor, and receive an instruction and/or service order from the server 110 via electrical signals or electromagnet signals. Within an electronic device, such as the terminal device 130, the device 140, the lock 170, and/or the server 110, when a processor thereof processes an instruction, transmits out an instruction, and/or performs an action, the instruction and/or action is conducted via electrical signals. For example, when the processor retrieves data (e.g., a plurality of user profiles) from a storage medium (e.g., the storage 150), it may transmit out electrical signals to a reading device of the storage medium, which may read structured data in the storage medium. The structured data may be transmitted to the processor in the form of electrical signals via a bus of the electronic device. Here, an electrical signal may refer to one electrical signal, a series of electrical signals, and/or a plurality of discrete electrical signals.

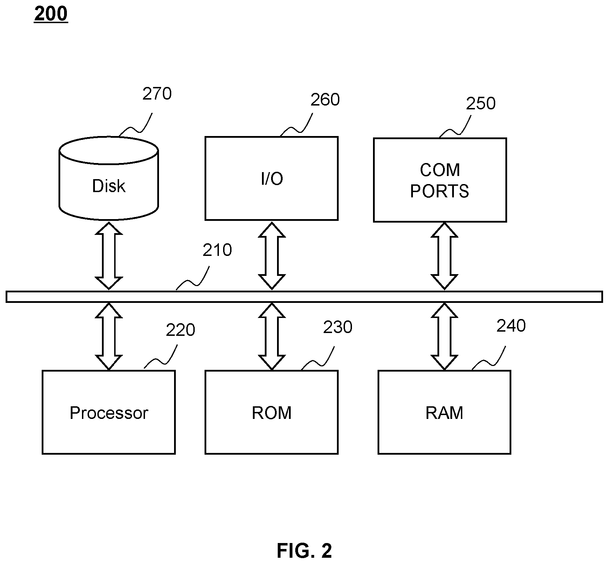

FIG. 2 a schematic diagram illustrating exemplary hardware and/or software components of a computing device 200 according to some embodiments of the present disclosure. The computing device 200 may be a general purpose computer or a special purpose computer. The computing device 200 may be used to implement any component of the security system 100 as described herein. For example, the processing engine 112 of the server 110, and/or the terminal device 130 may be implemented on the computing device 200, via its hardware, software program, firmware, or a combination thereof. Although only one such computer is shown for convenience, the computer functions related to the security system 100 as described herein may be implemented in a distributed manner on a number of similar platforms to distribute the processing load.

The computing device 200, for example, may include COM ports 250 connected to and from a network (e.g., the network 120) connected thereto to facilitate data communications. The computing device 200 may also include a processor 220 for executing program instructions to perform the functions of the server 110 described herein. The exemplary computer platform may include an internal communication bus 210, program storage and data storage of different forms, for example, a disk 270, and a read-only memory (ROM) 230, or a random access memory (RAM) 240, for various data files to be processed and/or transmitted by the computer. The exemplary computer platform may also include program instructions stored in the ROM 230, the RAM 240, and/or another type of non-transitory storage medium to be executed by the processor 220. The methods and/or processes of the present disclosure may be implemented as the program instructions. The computing device 200 also includes an I/O 260, supporting input/output between the computer, the user, and other components therein. The computing device 200 may also receive programming and data via network communications.

Merely for illustration, only one CPU and/or processor is described in the computing device 200. However, it should be noted that the computing device 200 in the present disclosure may also include multiple CPUs and/or processors, thus operation and/or method steps that are performed by one CPU and/or processor as described in the present disclosure may also be jointly or separately performed by the multiple CPUs and/or processors. For example, the CPU and/or processor of the computing device 200 may execute both step A and step B. As in another example, step A and step B may also be performed by two different CPUs and/or processors jointly or separately in the computing device 200 (e.g., the first processor executes step A and the second processor executes step B, or the first and second processors jointly execute steps A and B).

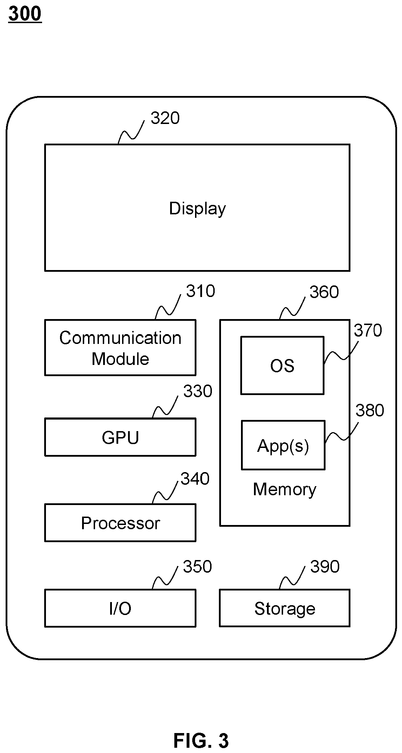

FIG. 3 is a schematic diagram illustrating exemplary hardware and/or software components of a mobile device 300 on which a terminal device may be implemented according to some embodiments of the present disclosure. As illustrated in FIG. 3, the mobile device 300 may include a communication module 310, a display 320, a graphics processing unit (GPU) 330, a processor 340, an I/O 350, a memory 360, and a storage 390. In some embodiments, any other suitable component, including but not limited to a system bus or a controller (not shown), may also be included in the mobile device 300. In some embodiments, a mobile operating system 370 (e.g., iOS^{™}, Android^{™}, Windows Phone^{™}) and one or more applications 380 may be loaded into the memory 360 from the storage 390 in order to be executed by the processor 340. The applications 380 may include a browser or any other suitable apps for transmitting, receiving and presenting information relating to the status of the device 140 (e.g., the location of the device 140) from the server 110. User interactions with the information stream may be achieved via the I/O 350 and provided to the server 110 and/or other components of the security system 100 via the network 120. In some embodiments, a user may borrow (or rent) a device 140 (e.g., a bicycle) via the mobile device 300. The user may also control the lock 170 of the device 140 via the mobile device 300. For example, the user may input an instruction to close the lock via the mobile device 300.

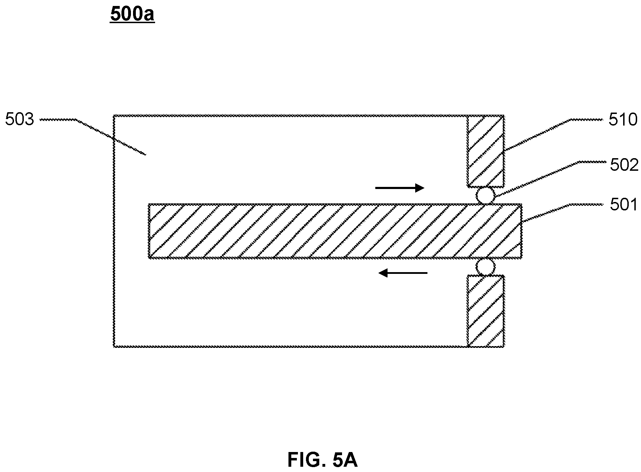

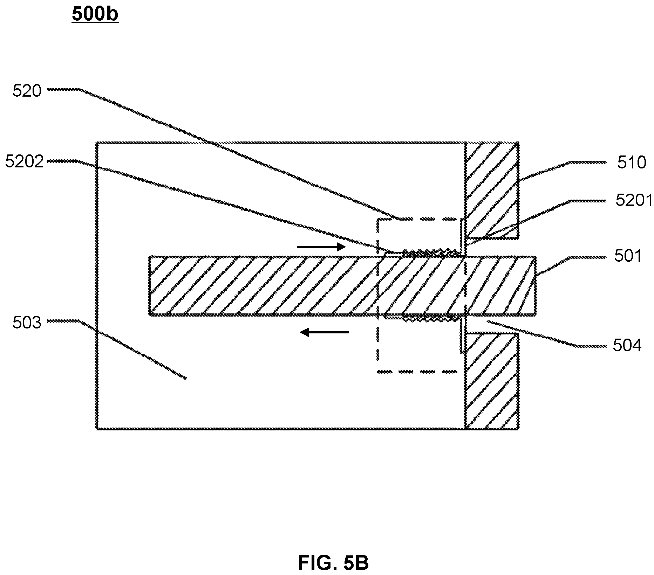

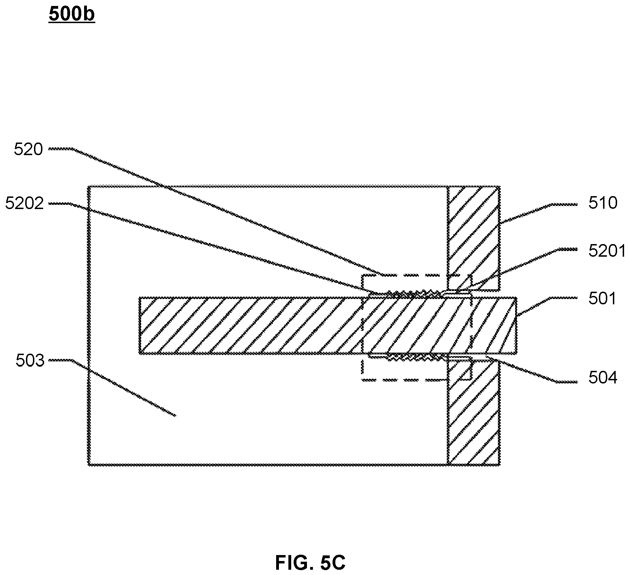

FIG. 4 is a schematic diagram illustrating hardware components of an exemplary lock according to some embodiments of the present invention. The lock 170 may include one or more components including, for example, a lock tongue 401, a lock pin 402, a position limiting component 403, an execution component 404, a handle 405, a lock shell 420, a waterproof structure 430, a cover shield 440, and a processor 450. More descriptions of the structure of the lock 170 may be found elsewhere in the present disclosure (e.g., FIGs. 5A-9C and the descriptions thereof, FIGs 5B and 5C in particular disclosing waterproof structures in accordance with the invention).

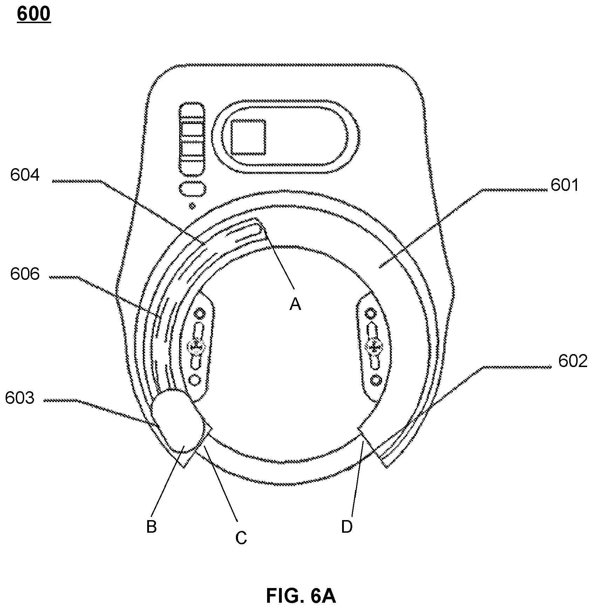

The lock tongue 401 may be configured to secure an object (e.g., the device 140). The lock tongue 401 may be movable along a predetermined pathway. In some embodiments, an end of the lock tongue 401 may move between two positions (e.g., position C and position D as shown in FIG. 6A). The lock tongue 401 may be made of a material including, for example, stainless steel, copper, aluminum, iron, polystyrene (PS), polymethyl methacrylate (PMMA), polyformaldehyde (POM), polycarbonate (PC), polyethylene terephthalate (PET), polybutylene terephthalate (PBT), polyphenylene oxide (PPO),or the like, or any combination thereof. In some embodiments, the lock tongue 401 may include one or more lock tongue grooves. The lock tongue grooves may coordinate with, e.g., the lock pin 402, to block the lock tongue 401 to move along an axial direction of the lock tongue 401(between two positions, e.g., position C and position D as shown in FIG. 6A).

The lock pin 402 may be configured to block the lock tongue 401 to move along the axial direction of the lock tongue 401 under certain conditions. The lock pin 402 may be inserted into a lock tongue groove to block the lock tongue 401 to move along the axial direction of the lock tongue 401. In some embodiments, the lock pin 402 may include a coupling pin and a drive pin. The coupling pin may be connected to the drive pin. The drive pin may drive the coupling pin to be inserted into the lock tongue groove. In some embodiments, the lock pin 402 may be connected to an actuator motor. The actuator motor may drive the coupling pin to move. In some embodiments, the actuator motor may drive the lock pin to move away from the lock tongue groove to unlock the lock 170. In some embodiments, the lock pin 402 may be retractable along a reciprocating movement direction of the lock pin 402. For example, at least a portion of the lock pin 402 may be moveable inward or outward the lock shell 420. In some embodiments, the lock pin 402 or an inner side of the lock shell 420 may include one or more limit pinholes. The limit pinholes may coordinate with, e.g., the position limiting component 403, to block a position of the lock pin 402 to move along the axial direction of the lock pin 402. The reciprocating movement direction of the lock pin 402 may be equal to the axial direction of the lock pin 402.

The position limiting component 403 may be configured to block the lock pin 402 to move along the axial direction of the lock pin 402. In some embodiments, the position limiting component 403 may block the lock pin 402 to move along the axial direction of the lock pin 402 when the lock pin 402 blocks the lock tongue 401 to move along the axial direction of the lock tongue 401. For example, the position limiting component 403 may block the lock pin 402 to move away from the lock tongue groove. Therefore, the position of the lock pin 402 relative to the lock shell 420 may remain unchanged if there is no instruction for unlocking the lock 170. In some embodiments, the position limiting component 403 may include at least one fixing part and at least one telescopic part. In some embodiments, the at least one telescopic part may be connected to the at least one fixing part. In some embodiments, the fixing part may be fixed on the lock shell 420 or the lock pin 402. The telescopic part may be inserted into a limit pinhole of the lock pin 402 after the lock pin 402 blocks the lock tongue 401 to move along the axial direction of the lock tongue 401.

The execution component 404 may be configured to drive a first movement of the position limiting component 403 and/or a second movement of the lock pin 402. In some embodiments, the first movement of the position limiting component 403 may include a movement of the position limiting component 403 away from the limit pinhole. The second movement of the lock pin 402 may include a movement of the lock pin 402 away from the lock tongue groove. In some embodiments, the first movement of the position limiting component 403 may be earlier than the second movement of the lock pin 402.

In some embodiments, the execution component 404 may be accommodated in the lock shell 420. In some embodiments, the execution component 404 may be connected or attached to the lock pin 402 and/or the position limiting component 403. In some embodiments, the execution component 404 may include a drive mechanism and a transmission mechanism. The drive mechanism may include a stepper motor, a direct current (DC) motor, a servo motor, a synchronous motor, a switched reluctance motor, an asynchronous motor, etc. The transmission mechanism may include a rack transmission mechanism, a gear transmission mechanism, etc.

The handle 405 may be configured to facilitate a manual manipulation of the lock tongue 401. In some embodiments, the handle 405 may be installed on the lock tongue 401. The handle 405 may be movable along a predetermined pathway. In some embodiments, the handle 405 may move between two positions (e.g., position A and position B as shown in FIG. 6A). The lock tongue 401 may move along with the handle 405. The status of the lock 170 may change with the movement of the handle 405 and/or the lock tongue 401. For example, the lock 600 may have a locked status if the handle 603 is in the position B as illustrated in FIG. 6A. As another example, the lock 600 may have an unlocked status if the handle 603 is not in the position B (e.g., in the position A). As still another example, the lock 600 may have an unlocked status if a first end of the lock tongue 602 moves to a position C as illustrated in FIG. 6A. As still another example, the lock 600 may have a locked status as illustrated in FIG. 6A if the first end of the lock tongue 602 moves to a position D.

The lock shell 420 may be configured to accommodate at least a portion of the lock tongue 401, at least a portion of the lock pin 402, at least a portion of the position limiting component 403, at least a portion of the execution component 404, etc. For example, the lock shell 420 may accommodate the lock pin 402, the position limiting component 403, the execution component 404, at least a portion of the lock tongue 401, etc. In some embodiments, the lock shell 420 may be configured to accommodate other components of the lock 170 described elsewhere in the present disclosure (e.g., a positioning module, a communication module, a lock cylinder, or the like, or any combination thereof).

The waterproof structure 430 may be configured to protect at least a portion of the lock tongue 401, at least a portion of the lock pin 402, at least a portion of the position limiting component 403, at least a portion of the execution component 404, etc., from being exposed to water. In accordance with the invention, the waterproof structure 430 includes the lock shell 420, the lock pin 402, and a waterproof pipe. The waterproof pipe may be connected to the lock shell 420 and the lock pin 402, and the waterproof pipe may block the gap between the lock shell 420 and the lock pin 402. In some embodiments, the waterproof pipe may be arranged around at least a portion of the lock pin 402. In some embodiments, the waterproof pipe may be retractable. In some embodiments, the waterproof pipe may be retractable along the direction that is the same as or opposite to the movement direction of the lock pin 402. For example, if the at least a portion of the lock pin 402 moves outward the lock shell 420, the waterproof pipe may extend. As another example, if the at least a portion of the lock pin 402 moves inward the lock shell 420, the waterproof pipe may contract. In some embodiments, the waterproof pipe may be non-retractable. For example, the waterproof pipe may be flexible and long enough to be arranged around at least a portion of the lock pin 402 that is moveable inward or outward the lock shell 420. The waterproof structure 430 described herein may be used in other types of devices, e.g., a keyboard, a camera, a recorder.

The cover shield 440 may be configured to close an opening of the lock shell 420, and prevent an object from falling into the lock shell 420 through the opening. For example, the cover shield 440 may prevent objects like stones and tree branches from falling inside the lock shell 420. In some embodiments, the cover shield 440 may close the opening when the lock 170 is locked. Alternatively or additionally, the cover shield 440 may close the opening when the lock 170 is unlocked. In some embodiments, the cover shield 440 may be connected to the handle 405, the lock shell 420, the lock tongue 401, or a combination thereof.

The processor 450 may be configured to control one or more components of the lock 170 (e.g., the lock tongue 401, the lock pin 402, the position limiting component 403, the execution component 404, the handle 405). For example, the processor 450 may be configured to transmit one or more instructions to the execution component 404 to drive the first movement of the position limiting component 403 and/or the second movement of the lock pin 402 to unlock the lock 170. The instruction may include a user's input by, for example, pressing a button, pressing a digit button, inputting a correct password, scanning a barcode for unlocking the lock 170, etc. In some embodiments, the processor 450 may be accommodated in the lock shell 420.

It should be noted that the above description of the lock 170 is merely provided for the purposes of illustration, and not intended to limit the scope of the present invention. For persons having ordinary skills in the art, multiple variations and modifications may be made under the teachings of the present invention. However, those variations and modifications do not depart from the scope of the present invention as defined by the appended claims. For example, one or more components of the lock 170 (e.g., the waterproof structure 430, the cover shield 440, the position limiting component 403, the processor 450) may be omitted.

FIG 5A illustrates a waterproof structure not being in accordance with the invention, whereas FIG 5B-5D illustrate sectional views of an exemplary waterproof structure according to some embodiments of the present invention As shown in FIG. 5A, the waterproof structure 500a may include a sealing wall 510, a reciprocating piece 501, a sealing ring 502, and a waterproof space 503.

The sealing ring 502 may be accomodated between the sealing wall 510 and the reciprocating piece 501. The sealing ring 502 may fill a gap between the sealing wall 510 and the reciprocating piece 501, and seal the sealing wall 510. The sealing ring 502 may be mechanically connected to the sealing wall 510 and the reciprocating piece 501. A cross section shape of the sealing ring 502 may vary. For example, the cross section shape of the sealing ring 502 may be U-shaped, O-shaped, rectangular, or Y-shaped. The material of the sealing ring 502 may vary. For example, the sealing ring 502 may be made of a material including, for example, acrylonitrile-butadiene rubber (NBR), hydrogenated butadiene-acrylonitrile rubber (HNBR), silicone rubber, fluororubber, ethylene propylene rubber (EPR), chloroprene rubber, butyl rubber, natural rubber, polyurethane rubber, metallic rubber, or the like, or any combination thereof.

The waterproof space 503 may refer to an isolated place into which water may be prevented from flowing. In some embodiments, the sealing wall 510 and the reciprocating piece 501 may be sealed by the sealing ring 502. Therefore, the sealing wall 510, the reciprocating piece 501, and the sealing ring 502 may enclose the waterproof space 503. In some embodiments, water may be prevented from flowing into the waterproof space 503 when at least a portion of the reciprocating piece 501 moves inward or outward the sealing wall 510 along the directions as indicated by the arrows in FIG. 5A. In some embodiments, the reciprocating piece 501 may apply a force on the sealing ring 502 during the movement of the reciprocating piece 501. It should be noted that the embodiments in FIG. 5A do not form part of the present disclosure but represent background art that is useful for understanding the present disclosure.

As shown in FIGs. 5B-5D, in accordance with the invention, the waterproof structure 500b includes the sealing wall 510, the reciprocating piece 501, the waterproof space 503, a waterproof pipe 520, and a through-hole 504. In some embodiments, the at least a portion of the reciprocating piece 501 may be moveable inward or outward the sealing wall 510 through the through-hole 504 along the direction as indicated by the arrows in FIG. 5B. In accordance with the invention, the waterproof pipe 520 is connected to the sealing wall 510 and the reciprocating piece 501, and the waterproof pipe 520 may block the gap between the sealing wall 510 and the reciprocating piece 501. Therefore, the sealing wall 510, the reciprocating piece 501, and the waterproof pipe 520 may enclose the waterproof space 503.

In some embodiments, the waterproof pipe 520 may be arranged around the at least a portion of the reciprocating piece 501. In some embodiments, the waterproof pipe 520 may be retractable. In some embodiments, the waterproof pipe 520 may be retractable along the direction that is the same as or opposite to the movement direction of the at least a portion of the reciprocating piece 501 (e.g., along the direction as indicated by the arrows in FIG. 5B). In some embodiments, if the at least a portion of the reciprocating piece 501 moves outward the sealing wall 510, the waterproof pipe 520 may extend, and the length of the waterproof pipe 520 may increase; if the at least a portion of the reciprocating piece 501 moves inward the sealing wall 510, the waterproof pipe 520 may contract, and the length of the waterproof pipe 520 may decrease. In some embodiments, if the at least a portion of the reciprocating piece 501 moves inward the sealing wall 510, the waterproof pipe 520 may extend, and the length of the waterproof pipe 520 may increase; if the at least a portion of the reciprocating piece 501 moves outward the sealing wall 510, the waterproof pipe 520 may contract, and the length of the waterproof pipe 520 may decrease. Since the waterproof pipe 520 may extend or contract along with the movement of the at least a portion of the reciprocating piece 501, the at least a portion of the reciprocating piece 501 may move without resistance from the waterproof pipe 520. Therefore, the service life of the waterproof pipe 520 may be lengthened, and water may be prevented from flowing into the waterproof space 503 even after the reciprocating piece 501 has moved for many times. It should be noted that in some embodiments, the waterproof pipe 520 may be non-retractable. For example, the waterproof pipe 520 may be flexible and long enough to be arranged around at least a portion of the reciprocating piece 501 that is moveable inward or outward the sealing wall 510.

In some embodiments, the waterproof pipe 520 may be made of a material including at least one of a flexible material, an anticorrosion material, an elastic material, a wear-resistant material, or the like, or any combination thereof. Exemplary anticorrosion materials may include stainless steel, titanium, titanium alloy, phenolic resin, epoxy resin, NBR, HNBR, silicone rubber, fluororubber, EPR, chloroprene rubber, butyl rubber, natural rubber, polyurethane rubber, metallic rubber, or the like, or any combination thereof. Exemplary elastic materials may include NBR, HNBR, silicone rubber, fluororubber, EPR, chloroprene rubber, butyl rubber, natural rubber, metallic rubber, polyurethane elastomer, polyolefin elastomer, styrene-butadiene-styrene (SBS), or the like, or any combination thereof. Exemplary wear-resistant materials may include NBR, HNBR, silicone rubber, fluororubber, EPR, chloroprene rubber, butyl rubber, natural rubber, metallic rubber, polyurethane elastomer, polyolefin elastomer, SBS, polytetrafluoroethylene (PTEF), or the like, or any combination thereof.

In some embodiments, the waterproof pipe 520 may include a first connection end 5201 and a second connection end 5202. In some embodiments, the first connection end 5201 of the waterproof pipe 520 may connect to the sealing wall 510. In some embodiments, the second connection end 5202 of the waterproof pipe 520 may connect to the reciprocating piece 501. In some embodiments, the connection between the first connection end 5201 of the waterproof pipe 520 and the sealing wall 510, and/or the connection between the second connection end 5202 of the waterproof pipe 520 and the reciprocating piece 501 may be realized using glue. In some embodiments, a first aperture size of the first connection end 5201 of the waterproof pipe 520 may be larger than a second aperture size of the second connection end 5202 of the waterproof pipe 520. In some embodiments, at least a portion of the waterproof pipe 520 between the first connection end 5201 and the second connection end 5202 may be a corrugated telescopic pipe, or a spiral telescopic pipe, or the like. Water flowing into the through-hole 504 may be blocked by the first connection end 5201 and the second connection end 5202 of the waterproof pipe 520, and may not flow into the waterproof space 503.

In some embodiments, the first connection end 5201 of the waterproof pipe 520 may connect to the sealing wall 510 in various ways. For example, as shown in FIG. 5B, the first connection end 5201 of the waterproof pipe 520 may connect to an inner side of the sealing wall 510. As another example, as shown in FIG. 5C, the first connection end 5201 of the waterproof pipe 520 may connect to a wall of the through-hole 504. In some embodiments, at least a portion of the first connection end 5201 may not be directly in contact with the reciprocating piece 501. Accordingly, there may be a gap between the first connection end 5201 of the waterproof pipe 520 and the reciprocating piece 501. In some embodiments, the width of the gap between the first connection end 5201 and the reciprocating piece 501 may be less than a predetermined or suitable value (e.g., 1 mm, 2 mm, 3 mm, etc.). In some embodiments, the second connection end 5202 may be directly in contact with the reciprocating piece 501.

In some embodiments, the first connection end 5201 and/or the second connection end 5202 of the waterproof pipe 520 may include one or more protruding elements. Accordingly, the sealing wall 510 and/or the reciprocating piece 501 may include one or more grooves corresponding to the protruding element(s). The connection between the first connection end 5201 of the waterproof pipe 520 and the sealing wall 510, and/or the connection between the second connection end 5202 of the waterproof pipe 520 and the reciprocating piece 501 may be enhanced because of the protruding element(s) and the groove(s). Therefore, a separation of the first connection end 5201 from the sealing wall 510 and a separation of the second connection end 5202 from the reciprocating piece 501 may be avoided even after the reciprocating piece 501 has moved for many times.

Merely by way of example, the first connection end 5201 of the waterproof pipe 520 may include a first protruding element (not shown). If the first connection end 5201 connects to the inner side of the sealing wall 510, the inner side of the sealing wall 510 may include a first groove (not shown) corresponding to the first protruding element. If the first connection end 5201 connects to the wall of the through-hole 504, the wall of the through-hole 504 may include a first groove (not shown) corresponding to the first protruding element. In some embodiments, the lock shell (e.g., the lock shell 420 (see FIG. 4), the lock shell 601 (see FIGs. 6A-6D)) may be used as the sealing wall 510. Accordingly, the inner side of the lock shell or the wall of the through-hole of the lock shell may include a first groove corresponding to the first protruding element. In some embodiments, the first protruding element may be insertable in the first groove, and the connection between the first connection end 5201 of the waterproof pipe 520 and the sealing wall 510 or the through-hole 504 may be enhanced.

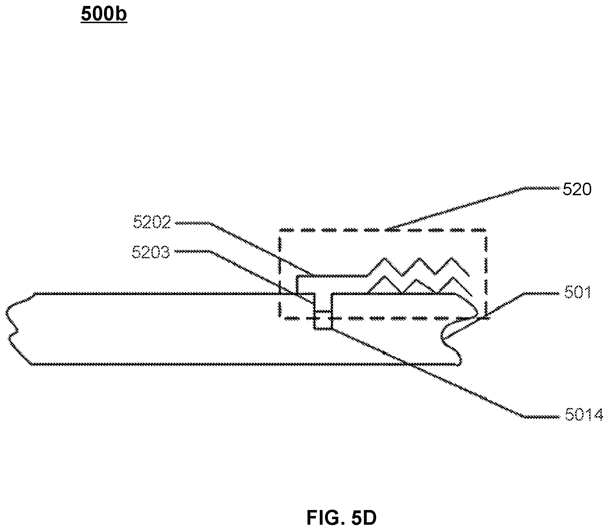

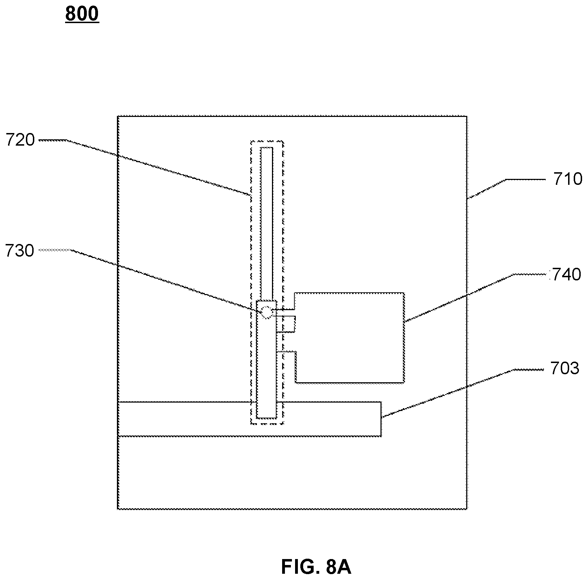

As another example, as shown in FIG. 5D, the second connection end 5202 of the waterproof pipe 520 may include a second protruding element 5203. In some embodiments, the reciprocating piece 501 may include a second groove 5014 corresponding to the second protruding element 5203. In some embodiments, the lock pin (e.g., the lock pin 402 (see FIG. 4), the lock pin 720 (see FIGs. 8A-9C)) may be used as the reciprocating piece 501. Accordingly, the lock pin may include a second groove. The second protruding element 5203 may be insertable in the second groove 5014, and the connection between the second connection end 5202 of the waterproof pipe 520 and the reciprocating piece 501 may be enhanced.

In some embodiments, a cross section shape of the protruding element(s) may vary. For example, the cross section shape of the protruding element(s) may be annular, toroidal, cylindrical, cubic, tri-prism, etc. Accordingly, the groove(s) may have the cross section shape(s) corresponding to the protruding element(s). For example, if a cross section shape of a protruding element is cylindrical, a corresponding cross section shape of a groove may be cylindrical. As another example, if a cross section shape of a protruding element is tri-prism, a cross section shape of a corresponding groove may be tri-prism.

The waterproof structure 500b may be applied in various devices including, for example, a lock of the device 140, a keyboard, a button of a camera, a button of a recorder, or the like. Accordingly, a cross section shape of the through-hole 504 and/or a cross section shape of the reciprocating piece 501 may relate to a specific application environment of the waterproof structure 500b. For example, the cross section of the through-hole 504 may have a circular shape, an ellipse shape, a strip shape, a triangle, a polygon, etc. In some embodiments, the cross section shape of the reciprocating piece 501 may correspond to the through-hole 504. For example, if the cross section of the through-hole 504 has a circular shape, the cross section of the reciprocating piece 501 may have a cylinder shape.

In some embodiments, a cross section shape of the inner side of the waterproof pipe 520 may relate to the cross section shape of the reciprocating piece 501. In some embodiments, in order to facilitate the waterproof pipe 520 to be arranged around the at least a portion of the reciprocating piece 501, the cross section shape of the inner side of the waterproof pipe 520 may be the same as the cross section shape of the reciprocating piece 501. For example, if the cross section of the reciprocating piece 501 has a cylinder shape, the cross section of the inner side of the waterproof pipe 520 may have a cylinder shape. It should be noted that the cross section shape of the through-hole 504, the reciprocating piece 501, and/or the waterproof pipe 520 are merely provided for the purpose of illustration, and not intended to limit the scope of the present invention as defined by the appended claims.

The waterproof structures shown in FIGs. 5A-5D are applied in a lock. The lock includes a lock shell, a lock pin, a waterproof pipe, a communication module, a positioning module, a lock cylinder, or any other component described in the present disclosure. The lock shell may accommodate at least a portion of the lock (e.g., the lock pin, the communication module, the positioning module, the lock cylinder, or the like). The lock shell may be used as the sealing wall 510. The lock shell may include a through-hole. At least a portion of the lock pin may be moveable inward or outward the lock shell through the through-hole. The waterproof pipe may be arranged around at least a portion of the lock pin. The waterproof pipe may block the gap between the lock shell and the lock pin. The waterproof pipe may include a first connection end and a second connection end. The first connection end of the waterproof pipe may connect to an inner side (or outer side) of the lock shell or a wall of the through-hole of the lock shell. The second connection end of the waterproof pipe may connect to the lock pin. The lock pin may be used as the reciprocating piece 501. In some embodiments, structures of the lock pin and the waterproof pipe may be similar to the structures of the reciprocating piece 501 and the waterproof pipe 520, respectively. In some embodiments, the lock pin may have a cross section shape corresponding to the through-hole of the lock shell. In some embodiments, the waterproof pipe may have a cross section shape corresponding to the through-hole of the lock shell. In some embodiments, the lock may include a waterproof space inside the lock shell. In some embodiments, the waterproof space may be enclosed by the waterproof pipe, the lock shell, and/or the lock pin. The waterproof space may accommodate one or more components of the lock, for example, a Bluetooth communication module, a network communication module, the positioning module, the lock cylinder, or the like, or any combination thereof.

FIGs. 6A-6F illustrate sectional views of an exemplary lock with a cover shield according to some embodiments of the present invention. As shown in FIG. 6A, the lock 600 may include a lock shell 601, a lock tongue 602, a handle 603, a cover shield 604, and an opening 606 arranged on the lock shell 601. In some embodiments, the lock 600 may include a lock pin (not shown) configured to block the lock tongue 602 to move along an axial direction of the lock tongue 602.

The lock shell 601 may accommodate at least a portion of the lock 600 (e.g., the lock tongue 602, a positioning module, a communication module). The lock shell 601 may be made of a material including, for example, stainless steel, copper, aluminum, iron, polystyrene (PS), polymethyl methacrylate (PMMA), polyformaldehyde (POM), polycarbonate (PC), polyethylene terephthalate (PET), polybutylene terephthalate (PBT), polyphenylene oxide (PPO), or the like, or any combination thereof.

The lock tongue 602 may secure or lock an object (e.g., the device 140). In some embodiments, at least a portion of the lock tongue 602 may be accommodated inside or shielded by the lock shell 601. The lock tongue 602 may be made of a material including, for example, stainless steel, copper, aluminum, iron, polystyrene (PS), polymethyl methacrylate (PMMA), polyformaldehyde (POM), polycarbonate (PC), polyethylene terephthalate (PET), polybutylene terephthalate (PBT), polyphenylene oxide (PPO),or the like, or any combination thereof. In some embodiments, the lock tongue 602 and the lock shell 601 may be made of the same material. In some embodiments, the lock tongue 602 and the lock shell 601 may be made of different materials.

In some embodiments, the handle 603 may be installed on the lock tongue 602. In some embodiments, the handle 603 may be configured to facilitate a manual manipulation of the lock tongue 602. In some embodiments, the handle 603 and/or the lock tongue 602 may be slidable along a predetermined pathway. In some embodiments, the status of the lock 600 (e.g., locked or unlocked) may change with the movement of the handle 603. For example, the lock 600 may have a locked status if the handle 603 is in the position B as illustrated in FIG. 6A. As another example, the lock 600 may have an unlocked status if the handle 603 is not in the position B (e.g., in the position A). In some embodiments, the movement of the handle 603 may drive a movement of the lock tongue 602. For example, as illustrated in FIG. 6A, if the handle 603 is in the position A, a first end of the lock tongue 602 may move to the position C. As another example, as illustrated in FIG. 6A, if the handle 603 is in the position B, the first end of the lock tongue 602 may move to the position D. The opening 606 of the lock shell 601 may facilitate the movement of the handle 603. In some embodiments, the opening 606 of the lock shell 601 may be extended along the axial direction of the lock tongue 602. In some embodiments, an extension direction of the opening 606 of the lock shell 601 may correspond to a movement direction of the handle 603 and/or the lock tongue 602. In some embodiments, the handle 603 may be slidable along the opening 606 of the lock shell 601.

The handle 603 may be made of a material including, for example, stainless steel, copper, aluminum, iron, polystyrene (PS), polymethyl methacrylate (PMMA), polyformaldehyde (POM), polycarbonate (PC), polyethylene terephthalate (PET), polybutylene terephthalate (PBT), polyphenylene oxide (PPO), or the like, or any combination thereof. A cross section of the handle 603 may have a cylinder shape, a polygonal shape, a sheet, etc. In some embodiments, an upper end of the handle 603 may include a glove. The glove may be made of a material including, for example, stainless steel, copper, aluminum, iron, polystyrene (PS), polymethyl methacrylate (PMMA), polyformaldehyde (POM), polycarbonate (PC), polyethylene terephthalate (PET), polybutylene terephthalate (PBT), polyphenylene oxide (PPO), or the like, or any combination thereof. In some embodiments, a cross section of the glove may have a cylinder shape, a polygonal shape, etc. The operating comfort of the handle 603 may be improved with the glove.

In some embodiments, if the lock 600 is locked, an internal space of the lock shell 601 may be exposed through the opening 606. In some embodiments, an object may fall into the lock shell 601 through the opening 606, and the lock tongue 602 may be stuck and an unlocking operation of the lock 600 may be affected. Exemplary objects may include stones, tree branches, or the like, or any combination thereof. The cover shield 604 may be configured to close the opening 606 of the lock shell 601, and prevent the object from falling into the lock shell 601. In some embodiments, the cover shield 604 may close the opening 606 of the lock shell 601 when the lock 600 is locked. In some embodiments, the cover shield 604 may close the opening 606 of the lock shell 601 when the lock 600 is unlocked. For example, a length of the cover shield 604 may be equal to or larger than that of the opening 606, and the cover shield 604 may be located on one side of the handle 603 opposite to the lock tongue 602, and the cover shield 604 may close the opening 606 when the lock 600 is locked. As another example, a length of the cover shield 604 may be no less than two times the length of the opening 606, one half of the cover shield 604 may be attached to one side of the handle 603 opposite to the lock tongue 602, and the other half of the cover shield 604 may be attached to the same side of the handle 603 as the lock tongue 602, and the cover shield 604 may close the opening 606 when the lock 600 is unlocked.

In some embodiments, the cover shield 604 may have the same or similar shape as the opening 606 of the lock shell 601 in a plane of the opening 606. For example, if the cover shield 604 has an annular sector shape in the plane of the opening 606, the opening 606 of the lock shell 601 may have the annular sector shape. In some embodiments, the cover shield 604 may have a two-dimensional sheet structure. In some embodiments, the cover shield 604 may have a three-dimensional structure including a flange. In some embodiments, the area of the cover shield 604 may be relatively larger than that of the opening 606. In some embodiments, a projection of the cover shield 604 in a plane of the opening 606 may overlap the opening 606 of the lock shell 601. In some embodiments, the cover shield 604 may be inside or outside the lock shell 601. For example, the cover shield 604 may be on an inner surface or an outer surface of the lock shell 601 close to the opening 606. Alternatively, the cover shield 604 may be on an outer surface of the lock shell 601 and cover the opening 606 of the lock tongue 602.

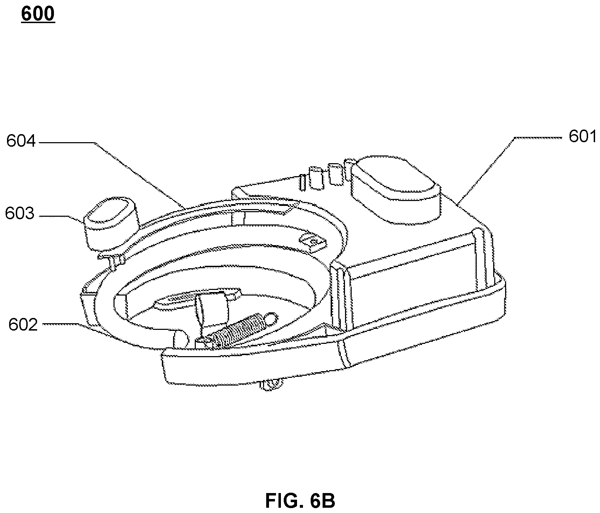

As shown in FIGs. 6B-6D, the cover shield 604 may be attached to or connected to the handle 603, the lock tongue 602, and/or the lock shell 601. As shown in FIG. 6B, the cover shield 604 may be connected to the handle 603. In some embodiments, the cover shield 604 may be connected to the handle 603 by welding, plugging, splicing, gluing, or the like, or a combination thereof. Exemplary ways of welding may include shielded metal arc welding (SMAW), metal active gas welding (MAGW), metal inert gas welding (MIGW), gas tungsten arc welding (GTAW), resistance welding, or the like, or a combination thereof. In some embodiments, the cover shield 604 may be connected to the handle 603 via one or more mechanical elements. Exemplary mechanical elements may include a screw, a nut, a gasket, an airtight glue, an airtight adhesive tape, etc.

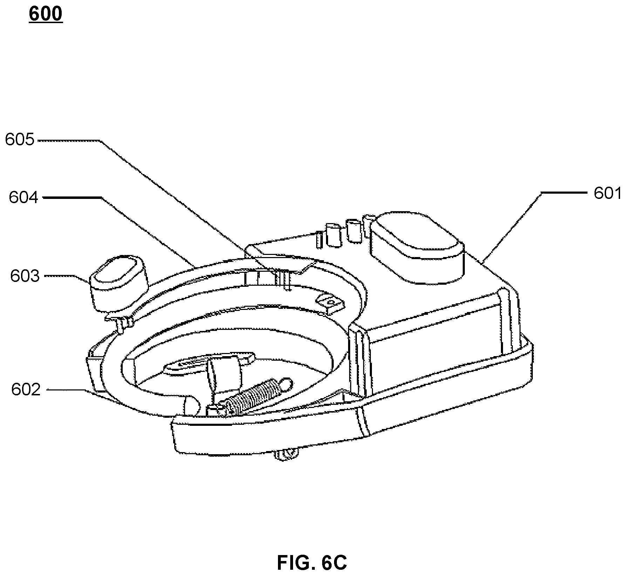

As shown in FIG. 6C, the cover shield 604 may be connected to the lock tongue 602. In some embodiments, the cover shield 604 may be connected to the lock tongue 602 through a metal fixation column 605. In some embodiments, the cover shield 604 may be connected to the lock tongue 602 by, for example, welding, plugging, splicing, gluing, or via one or more mechanical elements.

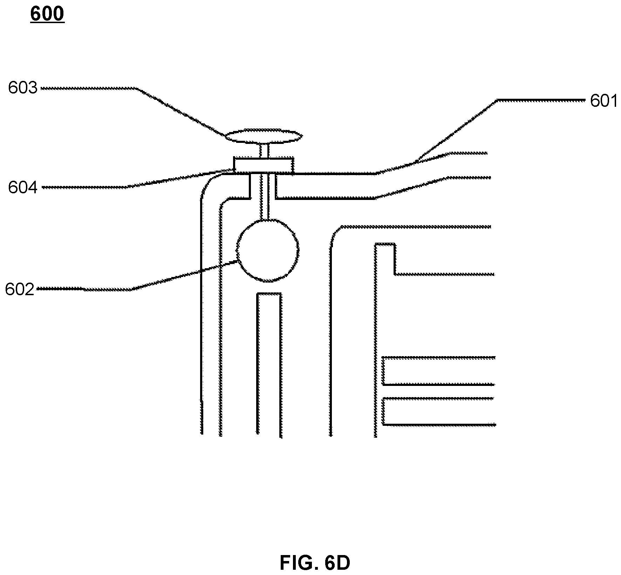

In some embodiments, as shown in FIG. 6D, the cover shield 604 may be directly in contact with the lock shell 601. The cover shield 604 may be directly fixed on the lock shell 601 by, for example, welding, plugging, splicing, gluing, or via one or more mechanical elements.

In some embodiments, the cover shield 604 may remain in its position during the movement of the handle 603. For example, as shown in FIG. 6D, the cover shield 604 may be directly in contact with the lock shell 601, and the cover shield 604 may maintain its position during the movement of the handle 603. Alternatively, the position of the cover shield 604 may change along with the movement of the handle 603. For example, as shown in FIGs. 6B and 6C, the cover shield 604 may be connected to the handle 603 and/or the lock tongue 602, the cover shield 604 may move with the handle 603 and/or the lock tongue 602.

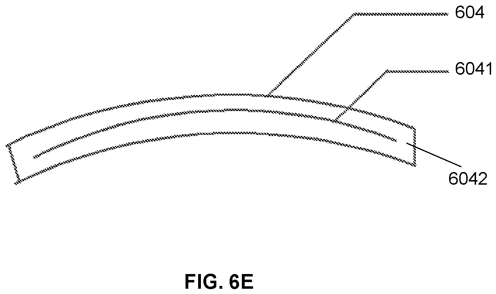

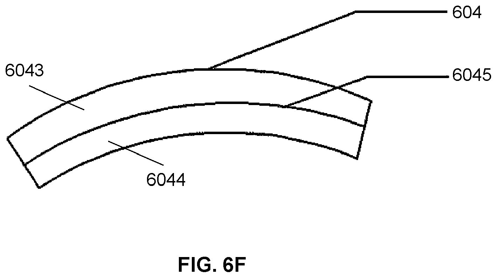

In some embodiments, as shown in FIG. 6E, the cover shield 604 may include a sheet 6042. The sheet 6042 may include a first slit 6041. In some embodiments, as shown in FIG. 6F, the cover shield 604 may include two sheets (e.g., the sheet 6043 and the sheet 6044). The sheet 6043 and the sheet 6044 may be matched to form a second slit 6045. In some embodiments, an extension direction of the first slit 6041 and/or an extension direction of the second slit 6045 may be the same as an extension direction of the cover shield 604. In some embodiments, the extension direction of the first slit 6041, the extension direction of the second slit 6045, and/or the extension direction of the cover shield 604 may correspond to a movement direction of the handle 603. In some embodiments, a length of the first slit 6041 and/or the second slit 6045 along the movement direction of the handle 603 may be equal to or larger than a length of the opening 606 of the lock shell 601 along the movement direction of the handle 603. In some embodiment, the first slit 6041 and/or the second slit 6045 may be in the middle of the cover shield 604.

In some embodiments, a width of the first slit 6041 and/or the second slit 6045 may be adjusted. In some embodiments, the width of the first slit 6041 and/or the second slit 6045 may be adjusted by pressing or rotating a button. The button may be located on the cover shield 604. In some embodiments, the width of the slit first slit 6041 and/or the second slit 6045 may be adjusted automatically when the handle 603 and/or the lock tongue 602 are moving or starts to move. In some embodiments, the width of the first slit 6041 and/or the second slit 6045 may decrease when the lock is in the locked status and/or the unlocked status, and the cover shield 604 may close the opening 606 of the lock shell 601. In some embodiments, the width of the first slit 6041 and/or the second slit 6045 may increase when the handle 603 and/or the lock tongue 602 are moving or starts to move, and the movement of the handle 603 and/or the lock tongue 602 may be facilitated.

In some embodiments, the sheet 6042, the sheet 6043, and/or the sheet 6044 may include an elastic material. In some embodiments, as illustrated in FIG. 6E, the first slit 6041 of the sheet 6042 may tend to close. In some embodiments, as illustrated in FIG. 6F, the sheet 6043 and the sheet 6044 may tend to get close to each other, and the second slit 6045 may tend to close. In some embodiments, the second slit 6045 may be forced to open if an outer force applies on the sheet 6043 and the sheet 6044. After the outer force is removed, the second slit 6045 may get closed. For example, the second slit 6045 may be forced to open during the movement of the handle 603, and may be closed when the handle 603 stay still.

In some embodiments, the cover shield 604 may include an elastic material or a rigid material. Exemplary elastic materials may include NBR, HNBR, silicone rubber, fluororubber, EPR, chloroprene rubber, butyl rubber, natural rubber, metallic rubber, polyurethane elastomer, polyolefin elastomer, styrene-butadiene-styrene (SBS), or the like, or any combination thereof. Exemplary rigid materials may include metal, alloy, stainless steel, rigid plastic, etc. In some embodiments, the cover shield 604 may include a protective coating. The protective coating may be made of a material including, for example, a waterproof material, a sunscreen material, an anticorrosion material, or the like, or any combination thereof. The waterproof material may include natural asphalt, petroleum asphalt, coal pitch, ethylene propylene rubber (EPR), chloroprene rubber, butyl rubber, polyvinyl chloride (PVC), polyisobutylene (PIB), polyurethane (PU), cement, or the like, or any combination thereof. The sunscreen material may include sugarcane fiber, xylon, glass fiber, polystyrene (PS), polyvinyl chloride (PVC), polyurethane (PU), ureaformaldehyde resin, aluminum foil, or the like, or any combination thereof. An exemplary anticorrosion material may be found elsewhere in the present disclosure.

It should be noted that the above description of the lock 600 is merely provided for the purposes of illustration, and not intended to limit the scope of the present invention, which is defined by the appended claims. For persons having ordinary skills in the art, multiple variations and modifications may be made under the teachings of the present disclosure. However, those variations and modifications do not depart from the scope of the present invention as defined by the appended claims. in accordance with the invention, the lock 600 includes a waterproof structure as illustrated in FIGs. 5B-5D, as an example, the lock 600 may further include one or more buttons for the setting of the unlocking code. A user may press the buttons corresponding to the unlocking code. If the unlocking code is validated, the handle 603 may automatically move, e.g., from position B to position A and drive the lock tongue 602 to move and open the lock 600, or the user may move the handle 603 (e.g., from position B to position A) and drive the lock tongue 602 to move and open the lock 600. In some embodiments, the user may manually move the handle 603 (e.g., from position A to position B) and drive the lock tongue 602 to move and lock the lock 600.

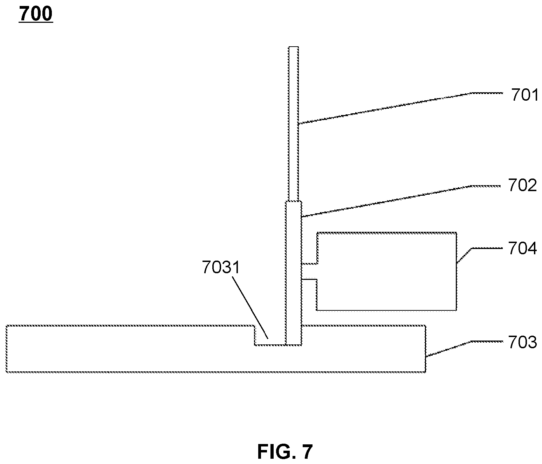

FIG. 7 illustrates a sectional view of a portion of an exemplary lock according to some embodiments of the present invention. The lock 700 may include a drive pin 701, a coupling pin 702, a lock tongue 703, and an actuator motor 704. As shown in FIG. 7, the coupling pin 702 may be connected to the drive pin 701. In some embodiments, the drive pin 701 may drive the coupling pin 702 to move. In some embodiments, the drive pin 701 may be configured to drive the coupling pin 702 to be inserted into a groove of the lock tongue 703 (also referred to as a lock tongue groove 7031) and lock the lock 700. In some embodiments, the actuator motor 704 may attach to the coupling pin 702. The actuator motor 704 may drive the coupling pin 702 to move. In some embodiments, the actuator motor 704 may drive the coupling pin 702 to move away from the groove of the lock tongue 703, thereby unlocking the lock 700. In some embodiments, the actuator motor 704 may include a stepper motor, a direct current (DC) motor, a servo motor, a synchronous motor, a switched reluctance motor, an asynchronous motor, etc.

FIGs. 8A-8C illustrate sectional views of an exemplary lock with a position limiting component according to some embodiments of the present invention. The lock 800 may be an embodiment of the lock 170. The lock 800 may include any combination of one or more mechanisms implementing the functions thereof described in this disclosure. The lock 800 may include a lock shell 710, a lock pin 720, a position limiting component 730, an execution component 740, and a lock tongue 703. Detailed descriptions of the lock shell 710 and/or the lock tongue 703 can be found elsewhere in the present disclosure (e.g., FIGs. 4-6F and the relevant descriptions thereof).

In some embodiments, the lock pin 720, the position limiting component 730, the execution component 740, and at least a portion of the lock tongue 703 may be inside the lock shell 710. The lock pin 720 may block the lock tongue 703 to move along an axial direction of the lock tongue 703 and/or to lock the lock 800. In some embodiments, the lock pin 720 may block the lock tongue 703 by moving into a groove of the lock tongue 703 (also referred to as a lock tongue groove).

In some embodiments, the position limiting component 730 may block the lock pin 720 to move along an axial direction of the lock pin 720. In some embodiments, the position limiting component 730 may block the lock pin 720 to move along an axial direction of the lock pin 720 when the lock pin 720 blocks the lock tongue 703 to move along the axial direction of the lock tongue 703. The position limiting component 730 may block the lock pin 720 to move away from the lock tongue groove, and a position of the lock pin 720 relative to the lock shell 710 may remain unchanged if there is no instruction or operation for unlocking the lock 800. Even if the lock 800 is shocked or hit under an external force, the position of the lock pin 720 may be limited by the position limiting component 730, and the lock pin 720 may still block the lock tongue 703 to move along the axial direction of the lock tongue 703, and thus, the lock 800 may not be unlocked. Therefore, the safety performance of the lock 800 may be improved.

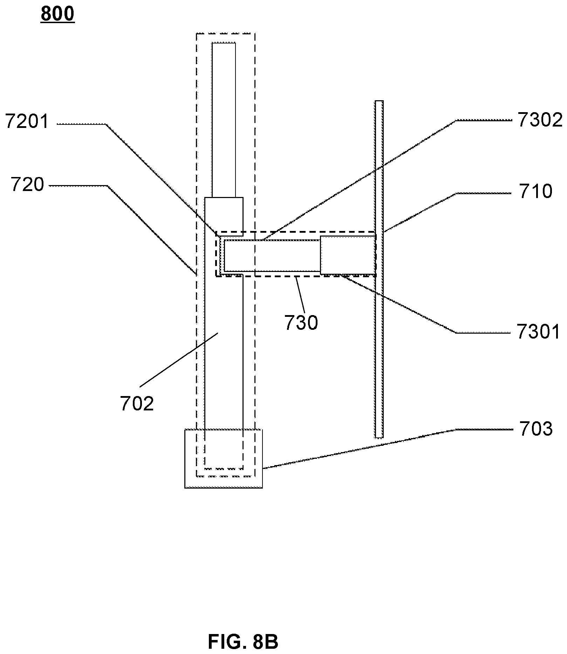

As shown in FIG. 8B, the position limiting component 730 may include at least one fixing part 7301 and at least one telescopic part 7302. The telescopic part 7302 may connect to or attach to the fixing part 7301. In some embodiments, the fixing part 7301 may be fixed on the lock shell 710. In some embodiments, the telescopic part 7302 may be elastic. In some embodiments, the telescopic part 7302 may be non-elastic, and the telescopic part 7302 may connect to the fixing part 7301 via an elastic element (e.g., a spring, a flexure strip, etc.). In some embodiments, the telescopic part 7302 may be made of a material including, for example, NBR, HNBR, silicone rubber, fluororubber, EPR, chloroprene rubber, butyl rubber, natural rubber, metallic rubber, polyurethane elastomer, polyolefin elastomer, styrene-butadiene-styrene (SBS), or the like, or any combination thereof. In some embodiments, the lock pin 720 (e.g., the coupling pin 702) may include at least one limit pinhole 7201. The limit pinhole 7201 may be configured to accommodate the position limiting component 730. In some embodiments, the limit pinhole 7201 may be perpendicular to an axial direction of the lock pin 720. Additionally or alternatively, the limit pinhole 7201 may be perpendicular to the inner side of the lock shell 710. In some embodiments, the telescopic part 7302 may be inserted into the limit pinhole 7201 of the lock pin 720 once the lock pin 720 blocks the lock tongue 703 to move along the axial direction of the lock tongue 703, and the position limiting component 730 may limit the position of the lock pin 720.

In some embodiments, the execution component 740 shown in FIG. 8A may connect to or attach to the lock pin 720 (e.g., the coupling pin 702) and/or the position limiting component 730 (e.g. the telescopic part 7302). In some embodiments, the execution component 740 may drive a first movement of the position limiting component 730 and/or a second movement of the lock pin 720 to unlock the lock 800. In some embodiments, the first movement of the position limiting component 730 may include a movement of the position limiting component 730 away from the lock pin 720. In some embodiments, the first movement of the position limiting component 730 may include a movement of the telescopic part 7302 away from the limit pinhole 7201. In some embodiments, the second movement of the lock pin 720 may include a movement of the lock pin 720 away from the lock tongue 703. In some embodiments, the second movement of the lock pin 720 may include a movement of the coupling pin 702 away from the lock tongue groove. In some embodiments, the first movement of the position limiting component 730 may be earlier than the second movement of the lock pin 720. The execution component 740 may be inside the lock shell 710.

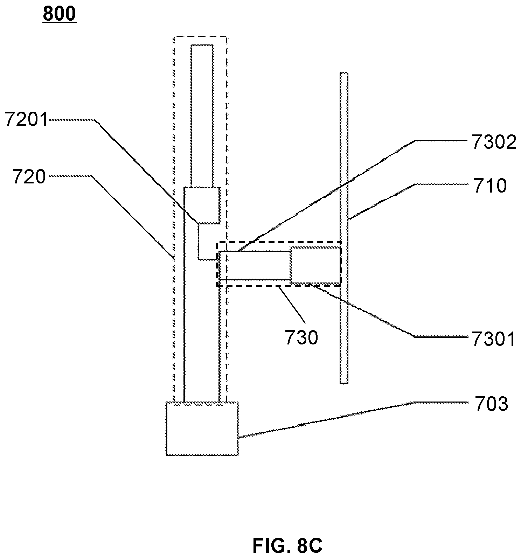

In some embodiments, as shown in FIG. 8C, after receiving an instruction for unlocking the lock, an execution component (not shown in FIG. 8C), e.g., the execution component 740 shown in FIG. 8A, may drive the position limiting component 730 to move away from the lock pin 720. In some embodiments, the execution component may then drive the lock pin 720 to move away from the lock tongue 703 to unlock the lock 800. Exemplary instructions may include an input of a user of the device 140 by, for example, pressing a button, pressing a digit button, inputting a password, scanning a barcode for unlocking the lock 800, etc.

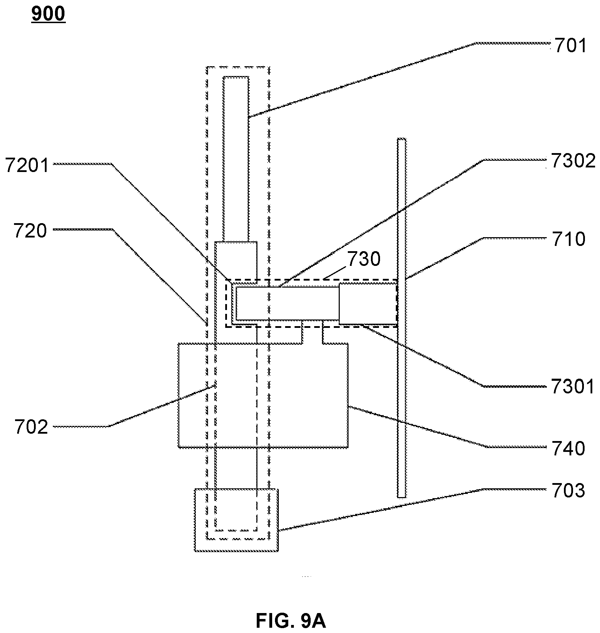

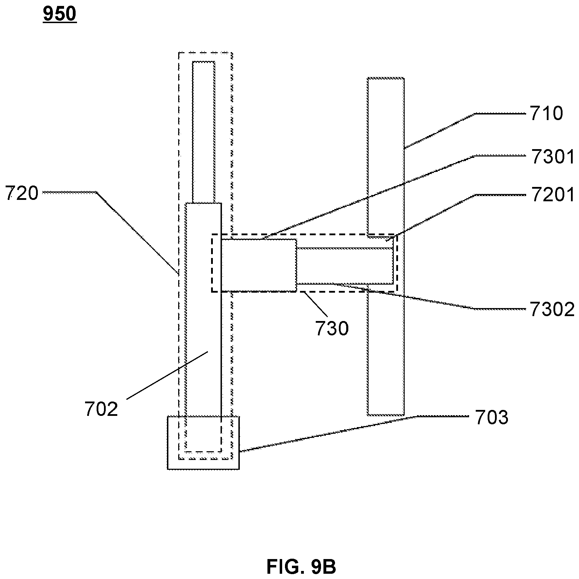

FIGs. 9A-9C illustrate sectional views of an exemplary lock with a position limiting component according to some embodiments of the present disclosure. As shown in FIG. 9A, the lock pin 720 may include a drive pin 701 and a coupling pin 702. The coupling pin 702 may be connected to the drive pin 701. In some embodiments, the drive pin 701 may drive the coupling pin 702 to move. In some embodiments, the coupling pin 702 may be inserted into a groove of the lock tongue 703 (also referred to as a lock tongue groove) when driven by the drive pin 701. In some embodiments, the coupling pin 702 may connect to or attach to the execution component 740. In some embodiments, as shown in FIGs. 8B, 8C, and 9A, the coupling pin 702 may include at least one limit pinhole 7201, i.e., the limit pinhole 7201 may be arranged on the coupling pin 702. In some embodiments, as shown in FIGs. 9B-9C, an inner side of the lock shell 710 may include at least one limit pinhole 7201, i.e., the limit pinhole 7201 may be configured in the lock shell 710. The limit pinhole 7201 may be configured to accommodate the position limiting component 730. In some embodiments, the limit pinhole 7201 may be perpendicular to an axial direction of the lock pin 720. Additionally or alternatively, the limit pinhole 7201 may be perpendicular to the inner side of the lock shell 710. The position limiting component 730 may include at least one fixing part 7301 and at least one telescopic part 7302. In some embodiments, the telescopic part 7302 may be elastic. The telescopic part 7302 may connect to or attach to the fixing part 7301. In some embodiments, as shown in FIGs. 8B, 8C, and 9A, the fixing part 7301 may be fixed on the lock shell 710. In some embodiments, as shown in FIGs. 9B-9C, the fixing part 7301 may be fixed to the lock pin 720 (e.g., the coupling pin 702).

In some embodiments, the execution component 740 may include a drive mechanism and a transmission mechanism (not shown). In some embodiments, the transmission mechanism may be coupled to the drive mechanism. In some embodiments, the drive mechanism may be configured to output a force. In some embodiments, the transmission mechanism may include a first portion and a second portion. The first portion of the transmission mechanism may be connected to or attached to the coupling pin 702 of the lock pin 720. The first portion of the transmission mechanism may be configured to transmit the force to drive the telescopic part 7302 to move away from the limit pinhole 7201. The second portion of the transmission mechanism may be connected to or attached to the telescopic part 7302 of the position limiting component 730. The second portion of the transmission mechanism may be configured to transmit the force to drive the coupling pin 702 to move away from the lock tongue groove. In some embodiments, the drive mechanism may include a stepper motor, a direct current (DC) motor, a servo motor, a synchronous motor, a switched reluctance motor, an asynchronous motor, etc. In some embodiments, the transmission mechanism may include a rack transmission mechanism, a gear transmission mechanism, etc.

In some embodiments, the execution component 740 may connect to or attach to the lock pin 720 (e.g., the coupling pin 702) and/or the position limiting component 730 (e.g., the telescopic part 7302). In some embodiments, the execution component 740 may drive a first movement of the position limiting component 730 and/or a second movement of the lock pin 720 to unlock the lock 900. In some embodiments, the first movement of the position limiting component 730 may include a movement of the position limiting component 730 away from the lock shell 710. In some embodiments, the first movement of the position limiting component 730 may include a movement of the telescopic part 7302 away from the limit pinhole 7201 of the lock shell 710. In some embodiments, the second movement of the lock pin 720 may include a movement of the lock pin 720 away from the lock tongue 703. In some embodiments, the second movement of the lock pin 720 may include a movement of the coupling pin 702 away from the lock tongue groove. In some embodiments, the first movement of the limit pinhole 7201 away from the lock shell 710 may be earlier than the second movement of the lock pin 720. In some embodiments, the execution component 740 may be inside the lock shell 710.

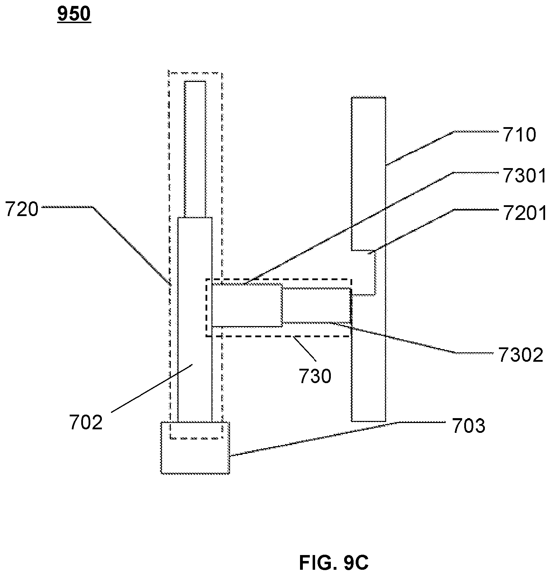

As shown in FIG. 9B, the telescopic part 7302 may be inserted into the limit pinhole 7201 of the lock shell 710 once the lock pin 720 blocks the lock tongue 703 to move along an axial direction of the lock tongue 703. As shown in FIG. 9C, after receiving an instruction for unlocking the lock 950, the execution component 740 may drive the position limiting component 730 to move away from the lock shell 710. In some embodiments, the execution component 740 may then drive the lock pin 720 to move away from the lock tongue 703 to unlock the lock 950. Exemplary instructions may include an input of a user of the device 140 by, for example, pressing a button, pressing a digit button, inputting a password, scanning a barcode for unlocking the lock, etc.

In some embodiments, the lock 800 (or the lock 900, or the lock 950) may include a processor (not shown). The processor may transmit one or more instructions to the execution component 740 to drive the first movement of the position limiting component 730 and/or the second movement of the lock pin 720 to unlock the lock 800 (or the lock 900, or the lock 950). The instruction may include the user's input by, for example, pressing a button, pressing a digit button, inputting a correct password, scanning a barcode for unlocking the lock, etc. In some embodiments, at least a portion of the execution component 740 may be electrically connected to the processor. The processor may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

This description is intended to be illustrative, and not to limit the scope of the present invention, which is defined by the appended claims. Many alternatives, modifications, and variations will be apparent to those skilled in the art. The features, structures, methods, and other characteristics of the exemplary embodiments described herein may be combined in various ways to obtain additional and/or alternative exemplary embodiments. However, those variations and modifications do not depart the scope of the present invention as defined by the appended claims.

It should be noted that the above description of the lock 800, the lock 900, and the lock 950 is merely provided for the purposes of illustration, and not intended to limit the scope of the present invention as defined by the appended claims. For persons having ordinary skills in the art, multiple variations and modifications may be made under the teachings of the present invention. However, those variations and modifications do not depart from the scope of the present invention as defined by the appended claims. In accordance with the invention, the lock 800, the lock 900, or the lock 950 include a waterproof structure as illustrated in FIGs 5B-5D, as an example however, the lock 800, the lock 900, or the lock 950 may further include a cover shield as illustrated in FIGs. 6A-6F.

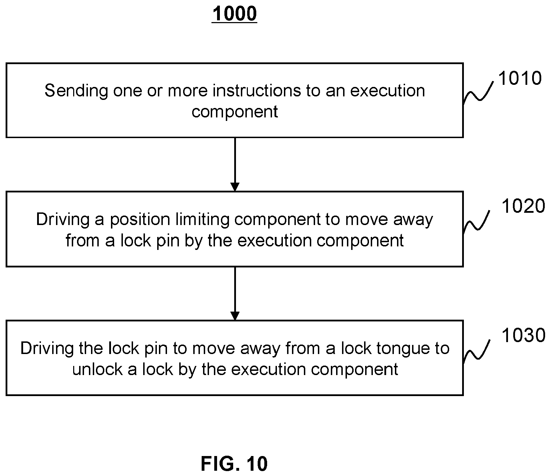

FIG. 10 is a flowchart illustrating an exemplary process for unlocking a lock according to embodiments of the present invention. In some embodiments, the process 1000 for unlocking a lock (e.g., the lock illustrated in FIGs. 6A-9C) may be implemented in the security system 100 as illustrated in FIG. 1. One or more operations of the process 1000 may be implemented in a terminal device 130 and/or the server 110. One or more operations of the process 1000 may also be implemented as one or more instructions stored in the storage 150 and called and/or executed by the processing engine 112. The operations of the illustrated process presented below are intended to be illustrative. In some embodiments, the process 1000 may be accomplished with one or more additional operations not described, and/or without one or more of the operations discussed. Additionally, the order in which the operations of the process 1000 as illustrated in FIG. 10 and described below is not intended to be limiting.

In 1010, a remote processor (e.g., the processing engine 112, the processor 220, the processor 340, etc.) may send one or more instructions to an execution component (e.g., the execution component 740 as shown in FIGs. 9A and 8A). The instruction may instruct the execution component 740 to unlock a lock described in FIGs. 8A-9C. In some embodiments, a user of the device 140 may send the instruction to the remote processor. The remote processor may then send the instruction to the execution component 740. In some embodiments, the user of the device 140 may send the instruction to a processor (e.g., the processor 450) of a lock (e.g., the lock 800, the lock 900, the lock 950). The processor of the lock may then send the instruction to the execution component 740. The instruction may include the user's input by, for example, pressing a button, pressing a digit button, inputting a password, scanning a barcode for unlocking the lock, etc.

In 1020, the execution component 740 may drive a position limiting component (e.g., the position limiting component 730 as shown in FIGs. 8A-9C) to release a position limitation of a lock pin (e.g., the lock pin 720 as shown in FIGs. 8A-9C). In some embodiments, a drive mechanism of the execution component 740 may output a force. A transmission mechanism of the execution component 740 may transmit the force to drive the position limiting component to release a position limitation of the lock pin. For example, as illustrated in FIGs. 8A-9C, a first portion of the transmission mechanism may transmit the force to drive a telescopic part 7302 of the position limiting component 730 to move away from the limit pinhole 7201 arranged on the coupling pin 702 or the lock shell 710..

In 1030, the execution component 740 may drive the lock pin (e.g., the lock pin 720) to move away from the lock tongue 703 to unlock a lock (e.g., the lock 800, the lock 900, the lock 950). In some embodiments, the execution component 740 may drive the lock pin to move after the position limitation of the lock pin is released. In some embodiments, the transmission mechanism of the execution component 740 may transmit the force to drive a coupling pin (e.g., the coupling pin 702) of the lock pin (e.g., the lock pin 720) to move away from the lock tongue groove. For example, as illustrated in FIGs. 8A-9C, a second portion of the transmission mechanism may transmit the force to drive the coupling pin 702 to move away from the lock tongue groove.

It should be noted that the above description of the process 1000 is merely provided for illustration, and not intended to limit the scope of the present invention. For persons having ordinary skills in the art, multiple variations and modifications may be made under the teachings of the present invention. However, those variations and modifications do not depart from the scope of the present invention as defined by the appended claims. For example, the operations 1020 and 1030 may be performed simultaneously, and the operations 1020 and 1030 may be integrated into one single operation.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein.

Moreover, certain terminology has been used to describe embodiments of the present invention. For example, the terms "one embodiment," "an embodiment," and/or "some embodiments" mean that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present invention.

Similarly, it should be appreciated that in the foregoing description of embodiments of the present invention, various features are sometimes grouped in a single embodiment, figure, or description thereof to streamline the disclosure aiding in the understanding of one or more of the various inventive embodiments. This method of disclosure, however, is not to be interpreted as reflecting an intention that the claimed object matter requires more features than are expressly recited in each claim. Rather, inventive embodiments lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

## Claims

1. A lock (170), comprising:
a lock tongue (401) configured to secure an object;
a lock pin (402) configured to block the lock tongue (401) to move along an axial direction of the lock tongue (401);
a lock shell (420) configured to accommodate at least a portion of the lock tongue (401) or at least a portion of the lock pin (402), the lock shell (420) including a through-hole (504), at least a portion of the lock pin (402) being moveable inward or outward the lock shell (420) through the through-hole (504); and
a waterproof pipe (520) arranged around at least a portion of the lock pin (402), wherein
the waterproof pipe (520) includes a first connection end (5201) and a second connection end (5202),
the first connection end (5201) of the waterproof pipe (520) connects to the lock shell (420), and
the second connection end (5202) of the waterproof pipe (520) connects to the lock pin (402).

2. The lock of claim 1, wherein the waterproof pipe (520) is retractable along a reciprocating movement direction of the lock pin (402).

3. The lock of claim 1 or 2, wherein the first connection end (5201) of the waterproof pipe (520) connects to an inner side of the lock shell (420) or a wall of the through-hole (504).

4. The lock of claim 3, wherein
the first connection end (5201) of the waterproof pipe (520) includes a first protruding element;
the inner side of the lock shell (420) or the wall of the through-hole (504) includes a first groove corresponding to the first protruding element; and
the first protruding element is insertable in the first groove.

5. The lock of any one of claims 1-4, wherein
the second connection end (5202) of the waterproof pipe (520) includes a second protruding element (5203);
the lock pin (402) includes a second groove (5014); and
the second protruding element (5203) is insertable in the second groove (5014).

6. The lock of any one of claims 1-5, wherein a first aperture size of the first connection end (5201) of the waterproof pipe (520) is larger than a second aperture size of the second connection end (5202) of the waterproof pipe (520).

7. The lock of any one of claims 1-6, wherein a portion of the lock tongue (401) is shielded by the lock shell (420), and the lock further comprises:
an opening (606) arranged on the lock shell (420), and extended along the axial direction of the lock tongue (401);
a handle (603) installed on the lock tongue (401), the handle (603) being slidable along the opening (606); and
a cover shield (604) configured to close the opening (606) of the lock shell (420).

8. The lock of claim 7, wherein a projection of the cover shield (604) in a plane of the opening (606) overlaps the opening (606) of the lock shell (420).

9. The lock of claim 7 or 8, wherein
the cover shield (604) includes a protective coating; and
the protective coating is made of a material including at least one of a waterproof material, a sunscreen material, or an anticorrosion material.

10. The lock of any one of claims 7-9, wherein
the cover shield (604) includes a sheet (6042) with a first slit (6041); or
the cover shield (604) includes two sheets (6043, 6044) that are matched to form a second slit (6045).

11. The lock of claim 1, wherein the lock further comprises:
a position limiting component (403) configured to block the lock pin (402) to move along an axial direction of the lock pin (402) when the lock pin (402) blocks the lock tongue (401) to move along the axial direction of the lock tongue (401); and
an execution component (404) configured to drive a first movement of the position limiting component (403) and a second movement of the lock pin (402), wherein
the lock pin (402), the position limiting component (403), the execution component (404), and at least a portion of the lock tongue (401) are accommodated in the lock shell (420),
the first movement of the position limiting component (403) includes a movement of the position limiting component (403) away from the lock pin (402) or the lock shell (420), and
the second movement of the lock pin (402) includes a movement of the lock pin (402) away from the lock tongue (401).

12. The lock of claim 11, wherein
the lock pin (402) or an inner side of the lock shell (420) includes a limit pinhole (7201) configured to accommodate the position limiting component (403);
the limit pinhole (7201) is perpendicular to an axial direction of the lock pin (402) or is perpendicular to the inner side of the lock shell (420);
the position limiting component (403) includes a fixing part (7301) and a telescopic part (7302) connected to the fixing part (7301);
the fixing part (7301) is fixed on the lock shell (420); and
the telescopic part (7302) is inserted into the limit pinhole (7201) once the lock pin (402) blocks the lock tongue (401).

13. The lock of claim 12, wherein
the lock pin (402) further includes a drive pin (701) and a coupling pin (702);
the coupling pin (702) is connected to the drive pin (701);
the limit pinhole (7201) is arranged on the coupling pin (702); and
the drive pin (701) is configured to drive the coupling pin (702) to be inserted into a lock tongue groove (7031) of the lock tongue (401).

14. The lock of claim 13, wherein
the execution component (404) includes a drive mechanism and a transmission mechanism;
the transmission mechanism is coupled to the drive mechanism;
the transmission mechanism includes a first portion and a second portion;
the first portion of the transmission mechanism is connected to the coupling pin (702) of the lock pin (402);
the second portion of the transmission mechanism is connected to the telescopic part (7302) of the position limiting component (403);
the drive mechanism is configured to output a force;
the first portion of the transmission mechanism is configured to transmit the force to drive the telescopic part (7302) to move away from the limit pinhole (7201); and
the second portion of the transmission mechanism is configured to transmit the force to drive the coupling pin (702) to move away from the lock tongue groove (7031).

15. A method for unlocking a lock (170) according to any one of claims 1-10, the lock including a lock pin (402) blocking a lock tongue (401), a position limiting component (403) blocking the lock pin (402), and an execution component (404), the method comprising:
sending one or more instructions to the execution component (404);
driving, by the execution component (404), the position limiting component (403) to release a position limitation of the lock pin (402); and
driving, by the execution component (404), the lock pin (402) to move away from the lock tongue (401) to unlock the lock (170).

## Patentansprüche

1. Schloss (170), umfassend:
eine Schlosszunge (401), die konfiguriert ist, um ein Objekt zu sichern;
einen Schlossstift (402), der zur Blockierung der Schlosszunge (401) konfiguriert ist, um sich entlang einer axialen Richtung der Schlosszunge (401) zu bewegen;
eine Schlossschale (420), die zur Aufnahme mindestens eines Abschnitts der Schlosszunge (401) oder mindestens eines Abschnitts des Schlossstifts (402) konfiguriert ist, wobei die Schlossschale (420) eine Durchgangsbohrung (504) einschließt, wobei mindestens ein Abschnitt des Schlossstifts (402) durch die Durchgangsbohrung (504) in die Schlossschale (420) hinein oder aus ihr heraus bewegbar ist; und
ein wasserdichtes Rohr (520), das um mindestens einen Abschnitt des Schlossstifts (402) herum angeordnet ist, wobei
das wasserdichte Rohr (520) ein erstes Anschlussende (5201) und ein zweites Anschlussende (5202) einschließt,
das erste Anschlussende (5201) des wasserdichten Rohrs (520) mit der Schlossschale (420) verbunden ist, und
das zweite Anschlussende (5202) des wasserdichten Rohrs (520) mit dem Schlossstift (402) verbunden ist.

2. Schloss nach Anspruch 1, wobei das wasserdichte Rohr (520) entlang einer Hin- und Herbewegungsrichtung des Schlossstifts (402) zurückziehbar ist.

3. Schloss nach Anspruch 1 oder 2, wobei das erste Anschlussende (5201) des wasserdichten Rohrs (520) mit einer Innenseite der Schlossschale (420) oder einer Wand der Durchgangsbohrung (504) verbunden ist.

4. Schloss nach Anspruch 3, wobei
das erste Anschlussende (5201) des wasserdichten Rohrs (520) ein erstes vorspringendes Element einschließt;
die Innenseite der Schlossschale (420) oder die Wand der Durchgangsbohrung (504) eine erste Nut einschließt, die dem ersten vorspringenden Element entspricht; und
das erste vorspringende Element in die erste Nut einführbar ist.

5. Schloss nach einem der Ansprüche 1-4, wobei
das zweite Anschlussende (5202) des wasserdichten Rohrs (520) ein zweites vorspringendes Element (5203) einschließt;
der Schlossstift (402) eine zweite Nut (5014) einschließt; und
das zweite vorspringende Element (5203) in die zweite Nut (5014) einführbar ist.

6. Schloss nach einem der Ansprüche 1-5, wobei eine erste Öffnungsgröße des ersten Anschlussendes (5201) des wasserdichten Rohres (520) größer ist als eine zweite Öffnungsgröße des zweiten Anschlussendes (5202) des wasserdichten Rohres (520).

7. Schloss nach einem der Ansprüche 1-6, wobei ein Abschnitt der Schlosszunge (401) durch die Schlossschale (420) abgeschirmt ist und das Schloss weiter Folgendes umfasst:
eine Öffnung (606), die an der Schlossschale (420) angeordnet ist und sich entlang der axialen Richtung der Schlosszunge (401) erstreckt;
einen Griff (603), der an der Schlosszunge (401) angebracht ist, wobei der Griff (603) entlang der Öffnung (606) verschiebbar ist; und
ein Abdeckschild (604), das konfiguriert ist, um die Öffnung (606) der Schlossschale (420) zu verschließen.

8. Schloss nach Anspruch 7, wobei ein Vorsprung des Abdeckschilds (604) in einer Ebene der Öffnung (606) die Öffnung (606) der Schlossschale (420) überlappt.

9. Schloss nach Anspruch 7 oder 8, wobei
das Abdeckschild (604) eine Schutzschicht einschließt; und
die Schutzschicht aus einem Material hergestellt ist, das mindestens eines von einem wasserdichten Material, einem Sonnenschutzmaterial oder einem Korrosionsschutzmaterial einschließt.

10. Schloss nach einem der Ansprüche 7-9, wobei
das Abdeckschild (604) eine Bahn (6042) mit einem ersten Schlitz (6041) einschließt; oder
das Abdeckschild (604) zwei Bahnen (6043, 6044) einschließt, die zur Bildung eines zweiten Schlitzes (6045) übereinstimmen.

11. Schloss nach Anspruch 1, wobei das Schloss weiter Folgendes umfasst:
eine Positionsbegrenzungskomponente (403), die zur Blockierung des Schlossstifts (402) konfiguriert ist, um sich entlang einer axialen Richtung des Schlossstifts (402) zu bewegen, wenn der Schlossstift (402) die Schlosszunge (401) blockiert, um sich entlang der axialen Richtung der Schlosszunge (401) zu bewegen; und
eine Ausführungskomponente (404), die konfiguriert ist, um eine erste Bewegung der Positionsbegrenzungskomponente (403) und eine zweite Bewegung des Schlossstifts (402) anzutreiben, wobei
der Schlossstift (402), die Positionsbegrenzungskomponente (403), die Ausführungskomponente (404) und zumindest ein Abschnitt der Schlosszunge (401) in der Schlossschale (420) untergebracht sind,
die erste Bewegung der Positionsbegrenzungskomponente (403) eine Bewegung der Positionsbegrenzungskomponente (403) weg von dem Schlossstift (402) oder der Schlossschale (420) einschließt, und
die zweite Bewegung des Schlossstifts (402) eine Bewegung des Schlossstifts (402) weg von der Schlosszunge (401) einschließt.

12. Schloss nach Anspruch 11, wobei
der Schlossstift (402) oder eine Innenseite der Schlossschale (420) eine Begrenzungsstiftbohrung (7201) einschließt, die zur Aufnahme der Positionsbegrenzungskomponente (403) konfiguriert ist;
die Begrenzungsstiftbohrung (7201) senkrecht zu einer axialen Richtung des Schlossstifts (402) oder senkrecht zur Innenseite der Schlossschale (420) steht;
die Positionsbegrenzungskomponente (403) einen Befestigungsteil (7301) und einen Teleskopteil (7302) einschließt, der mit dem Befestigungsteil (7301) verbunden ist;
der Befestigungsteil (7301) auf der Schlossschale (420) befestigt ist; und
der Teleskopteil (7302) in die Begrenzungsstiftbohrung (7201) eingeführt wird, sobald der Schlossstift (402) die Schlosszunge (401) blockiert.

13. Schloss nach Anspruch 12, wobei
der Schlossstift (402) weiter einen Antriebsstift (701) und einen Kopplungsstift (702) einschließt;
der Kopplungsstift (702) mit dem Antriebsstift (701) verbunden ist;
die Begrenzungsstiftbohrung (7201) auf dem Kopplungsstift (702) angeordnet ist; und
der Antriebsstift (701) konfiguriert ist, um den Kopplungsstift (702) anzutreiben, um in eine Schlusszungennut (7031) der Schlosszunge (401) eingeführt zu werden.

14. Schloss nach Anspruch 13, wobei
die Ausführungskomponente (404) einen Antriebsmechanismus und einen Übertragungsmechanismus einschließt;
der Übertragungsmechanismus mit dem Antriebsmechanismus gekoppelt ist;
der Übertragungsmechanismus einen ersten Abschnitt und einen zweiten Abschnitt einschließt;
der erste Abschnitt des Übertragungsmechanismus mit dem Kopplungsstift (702) des Schlossstifts (402) verbunden ist;
der zweite Abschnitt des Übertragungsmechanismus mit dem Teleskopteil (7302) der Positionsbegrenzungskomponente (403) verbunden ist;
der Antriebsmechanismus zur Ausgabe einer Kraft konfiguriert ist;
der erste Abschnitt des Übertragungsmechanismus zum Übertragen der Kraft konfiguriert ist, um den Teleskopteil (7302) anzutreiben, um sich von der Begrenzungsstiftbohrung (7201) wegzubewegen; und
der zweite Abschnitt des Übertragungsmechanismus zum Übertragen der Kraft konfiguriert ist, um den Kopplungsstift (702) anzutreiben, um sich von der Schlosszungennut (7031) wegzubewegen.

15. Verfahren zum Entriegeln eines Schlosses (170) nach einem der Ansprüche 1-10, wobei das Schloss einen Schlossstift (402), der eine Schlosszunge (401) blockiert, eine Positionsbegrenzungskomponente (403), die den Schlossstift (402) blockiert, und eine Ausführungskomponente (404) einschließt, wobei das Verfahren Folgendes umfasst:
Senden einer oder mehrerer Anweisungen an die Ausführungskomponente (404);
Antreiben der Positionsbegrenzungskomponente (403) durch die Ausführungskomponente (404), um eine Positionsbegrenzung des Schlossstifts (402) freizugeben; und
Antreiben des Schlossstifts (402) durch die Ausführungskomponente (404), um sich von der Schlosszunge (401) wegzubewegen, um das Schloss (170) zu entriegeln.

## Revendications

1. Serrure (170), comprenant :
une languette de verrouillage (401) configurée pour fixer un objet ;
une broche de verrouillage (402) configurée pour bloquer la languette de verrouillage (401) pour se déplacer le long d'une direction axiale de la languette de verrouillage (401) ;
une coque de verrouillage (420) configurée pour loger au moins une portion de la languette de verrouillage (401) ou au moins une portion de la broche de verrouillage (402), la coque de verrouillage (420) incluant un trou traversant (504), au moins une portion de la broche de verrouillage (402) étant mobile vers l'intérieur ou vers l'extérieur de la coque de verrouillage (420) à travers le trou traversant (504) ; et
un tuyau étanche à l'eau (520) agencé autour d'au moins une portion de la broche de verrouillage (402), dans laquelle
le tuyau étanche à l'eau (520) inclut une première extrémité de raccordement (5201) et une seconde extrémité de raccordement (5202),
la première extrémité de raccordement (5201) du tuyau étanche à l'eau (520) se raccorde à la coque de verrouillage (420), et
la seconde extrémité de raccordement (5202) du tuyau étanche à l'eau (520) se raccorde à la broche de verrouillage (402).

2. Serrure selon la revendication 1, dans laquelle le tuyau étanche à l'eau (520) est rétractable le long d'une direction de mouvement de va-et-vient de la broche de verrouillage (402).

3. Serrure selon la revendication 1 ou 2, dans laquelle la première extrémité de raccordement (5201) du tuyau étanche à l'eau (520) se raccorde à un côté intérieur de la coque de verrouillage (420) ou à une paroi du trou traversant (504).

4. Serrure selon la revendication 3, dans laquelle
la première extrémité de raccordement (5201) du tuyau étanche à l'eau (520) inclut un premier élément saillant ;
le côté intérieur de la coque de verrouillage (420) ou la paroi du trou traversant (504) inclut une première rainure correspondant au premier élément saillant ; et
le premier élément saillant peut être inséré dans la première rainure.

5. Serrure selon l'une quelconque des revendications 1-4, dans laquelle
la seconde extrémité de raccordement (5202) du tuyau étanche à l'eau (520) inclut un second élément saillant (5203) ;
la broche de verrouillage (402) inclut une seconde rainure (5014) ; et
le second élément saillant (5203) peut être inséré dans la seconde rainure (5014).

6. Serrure selon l'une quelconque des revendications 1-5, dans laquelle une première taille d'ouverture de la première extrémité de raccordement (5201) du tuyau étanche à l'eau (520) est supérieure à une seconde taille d'ouverture de la seconde extrémité de raccordement (5202) du tuyau étanche à l'eau (520).

7. Serrure selon l'une quelconque des revendications 1-6, dans laquelle une portion de la languette de verrouillage (401) est protégée par la coque de verrouillage (420), et la serrure comprend en outre :
une ouverture (606) agencée sur la coque de verrouillage (420), et étendue le long de la direction axiale de la languette de verrouillage (401) ;
une poignée (603) installée sur la languette de verrouillage (401), la poignée (603) pouvant coulisser le long de l'ouverture (606) ; et
un couvercle de protection (604) configuré pour fermer l'ouverture (606) de la coque de verrouillage (420).

8. Serrure selon la revendication 7, dans laquelle une projection du couvercle de protection (604) dans un plan de l'ouverture (606) chevauche l'ouverture (606) de la coque de verrouillage (420).

9. Serrure selon la revendication 7 ou 8, dans laquelle
le couvercle de protection (604) inclut un revêtement protecteur ; et
le revêtement protecteur est fait d'un matériau incluant au moins l'un parmi un matériau étanche à l'eau, un matériau d'écran solaire, ou un matériau anti-corrosion.

10. Serrure selon l'une quelconque des revendications 7-9, dans laquelle
le couvercle de protection (604) inclut une plaque (6042) avec une première fente (6041) ; ou
le couvercle de protection (604) inclut deux plaques (6043, 6044) qui correspondent pour former une seconde fente (6045).

11. Serrure selon la revendication 1, dans laquelle la serrure comprend en outre :
un composant de limitation de position (403) configuré pour bloquer la broche de verrouillage (402) pour se déplacer le long d'une direction axiale de la broche de verrouillage (402) lorsque la broche de verrouillage (402) bloque la languette de verrouillage (401) pour se déplacer le long de la direction axiale de la languette de verrouillage (401) ; et
un composant d'exécution (404) configuré pour entraîner un premier mouvement du composant de limitation de position (403) et un second mouvement de la broche de verrouillage (402), dans laquelle
la broche de verrouillage (402), le composant de limitation de position (403), le composant d'exécution (404), et au moins une portion de la languette de verrouillage (401) sont logés dans la coque de verrouillage (420),
le premier mouvement du composant de limitation de position (403) inclut un mouvement du composant de limitation de position (403) à l'écart de la broche de verrouillage (402) ou de la coque de verrouillage (420), et
le second mouvement de la broche de verrouillage (402) inclut un mouvement de la broche de verrouillage (402) à l'écart de la languette de verrouillage (401).

12. Serrure selon la revendication 11, dans laquelle
la broche de verrouillage (402) ou un côté intérieur de la coque de verrouillage (420) inclut un orifice de limite (7201) configuré pour loger le composant de limitation de position (403) ;
l'orifice de limite (7201) est perpendiculaire à une direction axiale de la broche de verrouillage (402) ou est perpendiculaire au côté intérieur de la coque de verrouillage (420) ;
le composant de limitation de position (403) inclut une partie de fixation (7301) et une partie télescopique (7302) raccordée à la partie de fixation (7301) ;
la partie de fixation (7301) est fixée sur la coque de verrouillage (420) ; et
la partie télescopique (7302) est insérée dans l'orifice de limite (7201) une fois que la broche de verrouillage (402) bloque la languette de verrouillage (401).

13. Serrure selon la revendication 12, dans laquelle
la broche de verrouillage (402) inclut en outre une broche d'entraînement (701) et une broche de couplage (702) ;
la broche de couplage (702) est raccordée à la broche d'entraînement (701) ; l'orifice de limite (7201) est agencé sur la broche de couplage (702) ; et
la broche d'entraînement (701) est configurée pour amener la broche de couplage (702) à être insérée dans une rainure de languette de verrouillage (7031) de la languette de verrouillage (401).

14. Serrure selon la revendication 13, dans laquelle
le composant d'exécution (404) inclut un mécanisme d'entraînement et un mécanisme de transmission ;
le mécanisme de transmission est couplé au mécanisme d'entraînement ;
le mécanisme de transmission inclut une première portion et une seconde portion ;
la première portion du mécanisme de transmission est raccordée à la broche de couplage (702) de la broche de verrouillage (402) ;
la seconde portion du mécanisme de transmission est raccordée à la partie télescopique (7302) du composant de limitation de position (403) ;
le mécanisme d'entraînement est configuré pour produire une force ;
la première portion du mécanisme de transmission est configurée pour transmettre la force pour amener la partie télescopique (7302) à se déplacer à l'écart de l'orifice de limite (7201) ; et
la seconde portion du mécanisme de transmission est configurée pour transmettre la force pour amener la broche de couplage (702) à se déplacer à l'écart de la rainure de languette de verrouillage (7031).

15. Procédé de déverrouillage d'une serrure (170) selon l'une quelconque des revendications 1-10, la serrure incluant une broche de verrouillage (402) bloquant une languette de verrouillage (401), un composant de limitation de position (403) bloquant la broche de verrouillage (402), et un composant d'exécution (404), le procédé comprenant les étapes consistant à :
envoyer une ou plusieurs instructions au composant d'exécution (404) ;
amener, par le composant d'exécution (404), le composant de limitation de position (403) à libérer une limitation de position de la broche de verrouillage (402) ; et
amener, par le composant d'exécution (404), la broche de verrouillage (402) à se déplacer à l'écart de la languette de verrouillage (401) pour déverrouiller la serrure (170).
